# EUROPEAN PATENT APPLICATION

(11) **EP 4 852 541 A1**
(43) Date of publication of application: **09.12.2026**
(21) Application number: 24922270.4
(22) Date of filing: 01.02.2024
(51) Int. Cl.: H04W 52/18, H04W 72/21, H04W 72/231

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); SHIBAIKE, Naoya, Tokyo 100-6150 (JP); NAGATA, Satoshi, Tokyo 100-6150 (JP); WANG, Jing, Beijing 100190 (CN); SUN, Weiqi, Beijing 100190 (CN)
(74) Representative: Hoffmann Eitle
(86) International application number: PCT/JP2024/003336
(87) International publication number: WO 2025/163864

(57) **Abstract**

A terminal according to one aspect of the present disclosure includes a receiving section that receives a configuration and an indication related to a closed-loop power control (CL-PC) adjustment state for a sounding reference signal (SRS), and a control section that determines, based on the configuration, whether the CL-PC adjustment state for the SRS is the same as that for a physical uplink shared channel (PUSCH) or SRS-specific. The control section controls to transmit, to an uplink (UL) reception point, an SRS transmission applied with a same CL-PC adjustment state as that for the PUSCH and to transmit, to a downlink (DL) transmission point, an SRS transmission applied with an SRS-specific CL-PC adjustment state separate from that for the PUSCH, based on whether transmission power control accumulation is configured.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, it is studied that, to enhance UL coverage, a UL reception point is provided in addition to typical transmission/reception points. UL dense deployment using a DL transmission point/macro Base Station (BS) and a UL reception point/micro BS, and the like are also under study.

However, it remains unclear how transmission power is determined when a terminal (user terminal, User Equipment (UE)) transmits a UL signal (for example, an SRS) to a UL reception point. Unless the UL transmission power can be appropriately controlled, throughput reduction may occur.

Thus, an object of the present disclosure is to provide a terminal, a radio communication method, and a base station that enable appropriate control of UL transmission power.

### Solution to Problem

A terminal according to one aspect of the present disclosure includes a receiving section that receives a configuration and an indication related to a closed-loop power control (CL-PC) adjustment state for a sounding reference signal (SRS), and a control section that determines, based on the configuration, whether the CL-PC adjustment state for the SRS is the same as that for a physical uplink shared channel (PUSCH) or SRS-specific. The control section controls to transmit, to an uplink (UL) reception point, an SRS transmission applied with a same CL-PC adjustment state as that for the PUSCH and to transmit, to a downlink (DL) transmission point, an SRS transmission applied with an SRS-specific CL-PC adjustment state separate from that for the PUSCH, based on whether transmission power control accumulation is configured.

### Advantageous Effects of Invention

According to one aspect of the present disclosure, it is possible to appropriately control UL transmission power.

### Brief Description of Drawings

[FIG. 1] FIG. 1A is a diagram to show an example of typical deployment of a transmission/reception point. FIG. 1B is a diagram to show an example of UL dense deployment.
[FIG. 2] FIG. 2 is a diagram to show an example of DL/UL coverage of a Heterogeneous Network (HetNet).
[FIG. 3] FIG. 3A is a diagram to show an example of association between RS indices and PL values. FIG. 3B is a diagram to show an example of association between RS indices and delta PL values.
[FIG. 4] FIG. 4 is a diagram to show an example of option 1 in UL dense deployment.
[FIG. 5] FIG. 5 is a diagram to show an example of option 2 in UL dense deployment.
[FIG. 6] FIG. 6 is a diagram to show an example of power control parameters for TCI state.
[FIG. 7] FIG. 7 is a diagram to show an example of a TCI-State information element of Rel. 17.
[FIG. 8] FIG. 8A and FIG. 8B show an example of a unified/common TCI framework.
[FIG. 9] FIG. 9A and FIG. 9B are diagrams to show examples of UL power control parameters in Rel. 17.
[FIG. 10] FIG. 10 is a conceptual diagram to show an example of an asymmetric DL sTRP/UL mTRP deployment scenario.
[FIG. 11] FIG. 11 is a conceptual diagram to show an example of SRS transmission according to embodiment 0-0.
[FIG. 12] FIG. 12 is a conceptual diagram to show another example of the SRS transmission according to embodiment 0-0.
[FIG. 13] FIG. 13 is a conceptual diagram to show an example of SRS transmission according to embodiment 0-1.
[FIG. 14] FIG. 14 is a diagram to show an example of SRS configuration according to embodiment 0-1.
[FIG. 15] FIG. 15 is a conceptual diagram to show an example of SRS transmission according to embodiment 0-2.
[FIG. 16] FIG. 16 is a diagram to show an example of SRS configuration according to embodiment 0-2.
[FIG. 17] FIG. 17 is a conceptual diagram to show an example of SRS transmission according to embodiment 0-3.
[FIG. 18] FIG. 18 is a diagram to show an example of SRS configuration according to embodiment 0-3.
[FIG. 19] FIG. 19 is a conceptual diagram to show an example of SRS transmission according to embodiment 0-4.
[FIG. 20] FIG. 20 is a diagram to show an example of SRS configuration according to embodiment 0-4.
[FIG. 21] FIG. 21 is a conceptual diagram to show an example of SRS transmission according to embodiment 1-1.
[FIG. 22] FIG. 22A and FIG. 22B are diagrams to show an example of SRS configuration according to embodiment 1-1.
[FIG. 23] FIG. 23 is a conceptual diagram to show variations of SRS transmission according to embodiment 1-1.
[FIG. 24] FIG. 24 is a diagram to show variations of SRS configuration according to embodiment 1-1.
[FIG. 25] FIG. 25 is a conceptual diagram to show an example of SRS transmission according to embodiment 1-2.
[FIG. 26] FIG. 26A to FIG. 26C are diagrams to show an example of SRS configuration according to embodiment 1-2.
[FIG. 27] FIG. 27 is a conceptual diagram to show an example of SRS transmission according to embodiment 2-2/3-2.
[FIG. 28] FIG. 28A and FIG. 28B are diagrams to show an example of SRS configuration according to embodiment 2-2/3-2.
[FIG. 29] FIG. 29A and FIG. 29B are diagrams to show an example of SRS configuration according to embodiment 2-2/3-2.
[FIG. 30] FIG. 30A and FIG. 30B are diagrams to show an example of SRS configuration according to aspect 5-1.
[FIG. 31] FIG. 31A and FIG. 31B are diagrams to show an example of SRS configuration according to aspect 5-2.
[FIG. 32] FIG. 32A and FIG. 32B are diagrams to show examples of a TPC command (DCI field) according to a sixth embodiment.
[FIG. 33] FIG. 33A and FIG. 33B are diagrams to show other examples of the TPC command (DCI field) according to the sixth embodiment.
[FIG. 34] FIG. 34 is a diagram to show an example of a new higher layer parameter for using DCI format 2_3.
[FIG. 35] FIG. 35 is a diagram to show an example of a schematic structure of a radio communication system according to one embodiment.
[FIG. 36] FIG. 36 is a diagram to show an example of a structure of a base station according to one embodiment.
[FIG. 37] FIG. 37 is a diagram to show an example of a structure of a user terminal according to one embodiment.
[FIG. 38] FIG. 38 is a diagram to show an example of a hardware structure of the base station and the user terminal according to one embodiment.
[FIG. 39] FIG. 39 is a diagram to show an example of a vehicle according to one embodiment.

### Description of Embodiments

### (Scenario 1: UL Dense Deployment (UL-only TRP))

In Rel-15 NR, coverages (reachable distances) of a PUSCH, PUCCH, PRACH, PDSCH, PDCCH, and PBCH are not equal to each other. The PUSCH coverage is restricted, especially at a high frequency. For future radio communication systems (for example, Rel. 18, Rel. 19, or later versions), improvement in at least one of UL coverage or UL throughput is under study.

It is studied that, to enhance UL coverage, a UL reception point is provided in addition to typical transmission/reception points. Thus, an example of typical deployment of a transmission/reception point and an example of deployment provided with a UL reception point (UL dense deployment) will be described.

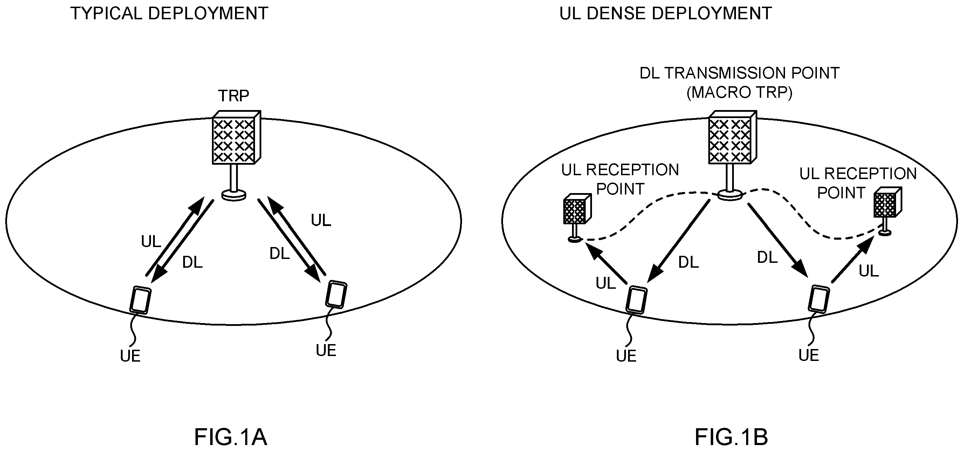

FIG. 1A is a diagram to show the example of the typical deployment of a transmission/reception point. In FIG. 1A, each UE receives a DL signal from the transmission/reception point (TRP) and transmits a UL signal to the TRP. For example, the UE and the TRP being far from each other leads to large pathloss, which may degrade communication quality.

FIG. 1B is a diagram to show the example of the UL dense deployment. It is studied that, to enhance UL coverage, such a UL reception point as that shown in FIG. 1B is provided in addition to such a DL transmission point as that shown in FIG. 1A. In FIG. 1B, each UE receives a DL signal from a DL transmission point (TRP/central TRP/DL TRP/macro TRP) supporting a macro cell and transmits a UL signal to a corresponding UL reception point (for example, a reception point with lower pathloss/received power). Note, however, that the UE can perform UL transmission to the DL transmission point.

Using such UL dense deployment as that shown in FIG. 1B reduces pathloss, improves UL signaling quality, and obtains a higher coding rate, as compared to such typical deployment as that shown in FIG. 1A, thereby enabling both coverage and a UL data rate to be improved. The UL reception point primarily performs reception, and thus has a reduced number of required functions (such as a power amplifier) and low cost as compared to a transmission/reception point corresponding to a typical small cell, leading to extremely simple deployment management.

### (Scenario 2: Decoupling of DL TRP and UL TRP in HetNet)

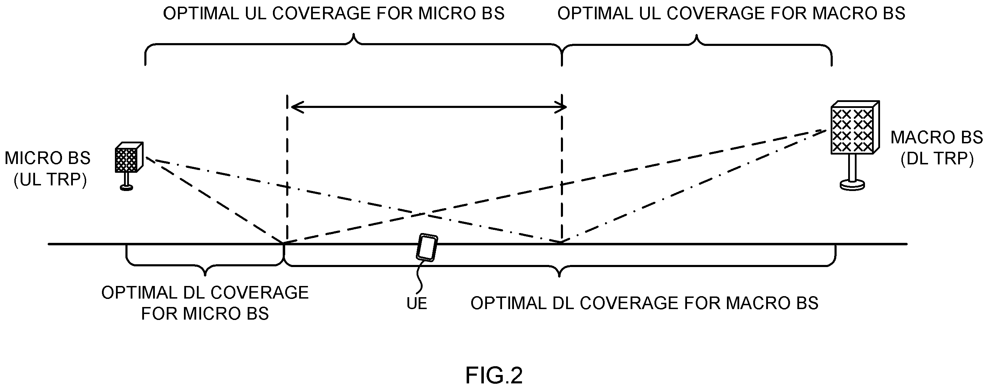

In the present disclosure, a Heterogeneous Network (HetNet) using a macro Base Station (BS) (DL TRP) and a micro BS (UL TRP) may be applied (FIG. 2). In the normal HetNet, transmission power of the macro BS is different from that of the micro BS. The optimal DL coverage and the optimal UL coverage are different. For example, the DL coverage is determined by RSRP, and the UL coverage is determined by pathloss (PL).

In an example of FIG. 2, the UE is included in the optimal DL coverage of the macro BS and the optimal UL coverage of the micro BS. In this case, the UE can receive DL from the macro BS and transmit UL to the micro BS. Note, however, that the UE may transmit some reference signals/channels (for example, an SRS for Antenna switching (AS) usage used to acquire DL CSI) to the macro BS. Accordingly, there is a possibility that the UE requires two timing advances (TAs) in this scenario. Note that the SRS for AS is a signal for a base station (macro BS) to perform DL CSI measurement (for example, determination of a DL MIMO precoder) by using channel reciprocity, based on SRS reception, and thus is transmitted to the macro BS. On the other hand, an SRS for Codebook/Non-codebook usage is used for determination of a precoder/beam for the PUSCH, and thus is transmitted to the micro BS.

In the HetNet, even if the micro BS has a DL transmission capability, the energy of the micro BS can be saved by turning off DL almost all the time. In this case, the function of the micro BS is similar to that of a UL-only TRP (UL reception point).

### (Reception of Pathloss (PL))

The UE may receive, via DL signaling, first information indicating pathloss (PL) estimated and notified (transmitted) by a network and used for transmission power control (TPC). The DL signaling may be at least one of higher layer signaling (for example, RRC or a MAC CE) or physical layer signaling (for example, downlink control information (DCI)).

The UE may compute, by using the received pathloss (PL_{b,f,c}(q_{d}), PL_{b,f,c}) (pathloss for an active UL BWP b in a carrier f of a serving cell c, with use of index q_{d}), UL signal transmission power (for example, PUSCH/PUCCH/SRS/PRACH transmission power) for a reception point to which downlink data is not transmitted.

{Option 1} A network may notify the UE of an absolute pathloss (PL) value [dB] for each RS index (transmit the absolute pathloss value to the UE). The UE may directly use the notified absolute pathloss value for calculation of the transmission power.
{Option 2} The network may notify the UE of a relative pathloss (delta PL) value [dB] for each RS index (transmit the relative pathloss value to the UE). The UE may use a pathloss value obtained by applying (adding or subtracting) the received delta PL value to a pathloss value estimated from a DL RS transmitted from a macro cell (macro BS/central TRP) in an existing manner, for calculation of the transmission power.

Notification/configuration of the PL value/delta PL value in options 1 and 2 may be performed for each index of q_{d}/SSB/CSI-RS/SRS resource/SRS resource set. Notification of one or a plurality of RS indices and the PL value/delta PL value corresponding to each RS index may be performed by DL signaling. The PL value/delta PL value may be interpreted as a PL parameter/delta PL parameter.

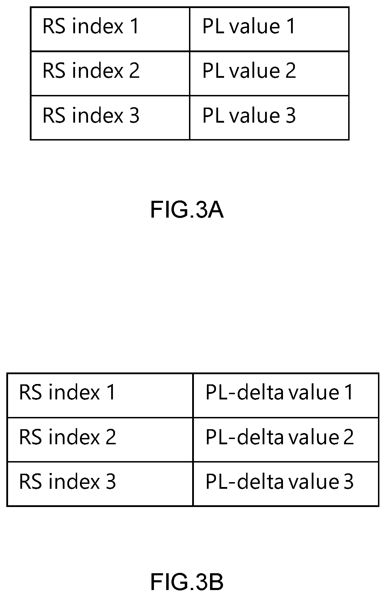

FIG. 3A is a diagram to show an example of association between RS indices and PL values. FIG. 3B is a diagram to show an example of association of RS indices and delta PL values. The association (correspondence) between the RS indices and the PL values/delta PL values is not limited to FIG. 3A and FIG. 3B. For example, one RS index may correspond to a plurality of PL values/delta PL values. Note that the quantization table (range and step) of the PL values/delta PL values may be defined in advance in a specification. A PL value/delta PL value to be notified may be a quantized value or the index of the quantized value.

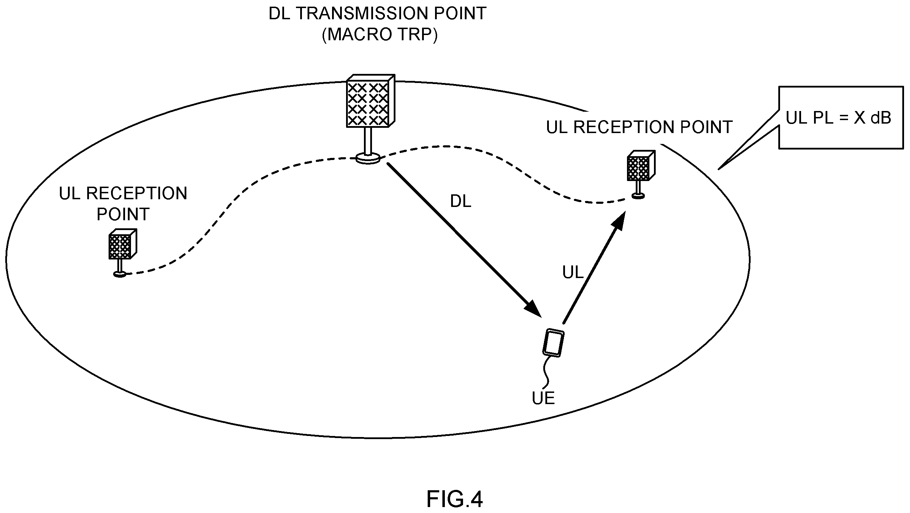

FIG. 4 is a diagram to show an example of option 1 in UL high density deployment. A UL reception point receives/measures a UL signal. When a DL transmission point (macro TRP/gNB) knows the transmission power of the UL signal, the DL transmission point can know the accurate PL value of the UL reception point. In this case, the DL transmission point can notify the UE of the absolute PL value (X [dB]) of the UL reception point.

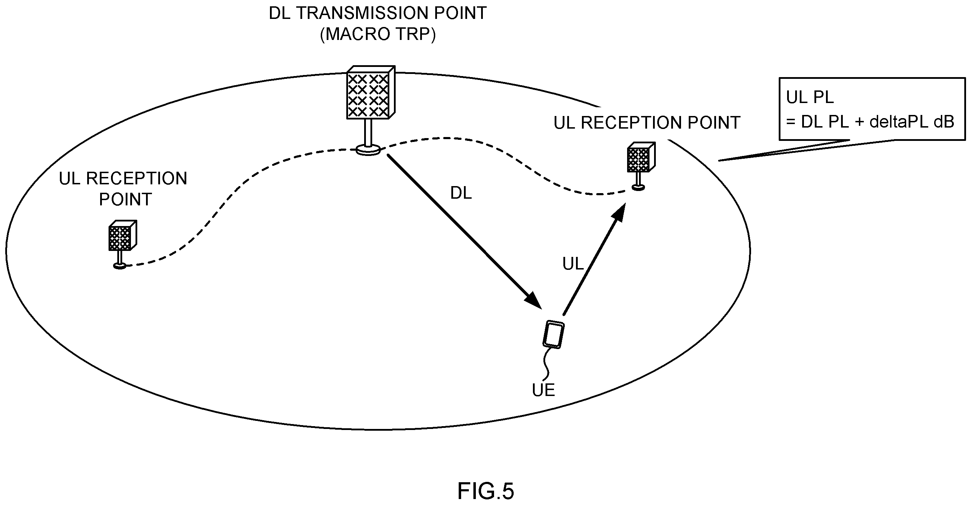

FIG. 5 is a diagram to show an example of option 2 in UL high density deployment. When both a DL transmission point (macro TRP/gNB) and a UL reception point measure the same resource, the DL transmission point can recognize the difference between the PL between the DL transmission point and a UE and the PL between the UL reception point and the UE. In this case, the DL transmission point may notify the UE of the difference (relative PL/delta PL). The relative PL/delta PL may be referred to as a PL offset.

As described above, even when the UE is not notified of a DL RS (RS index) used for pathloss estimation, the UE can calculate transmission power by using the notified PL value/delta PL value.

### (TCI, Spatial Relation, QCL)

For NR, control of reception processing (for example, at least one of reception, demapping, demodulation, or decoding) and transmission processing (for example, at least one of transmission, mapping, precoding, modulation, or coding) of at least one of a signal or a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, or a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) or a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), or an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), or a reference signal for QCL detection (also referred to as a QRS).

The SSB is a signal block including at least one of a primary synchronization signal (PSS), a secondary synchronization signal (SSS), or a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (UL Power Control Parameter for TCI State)

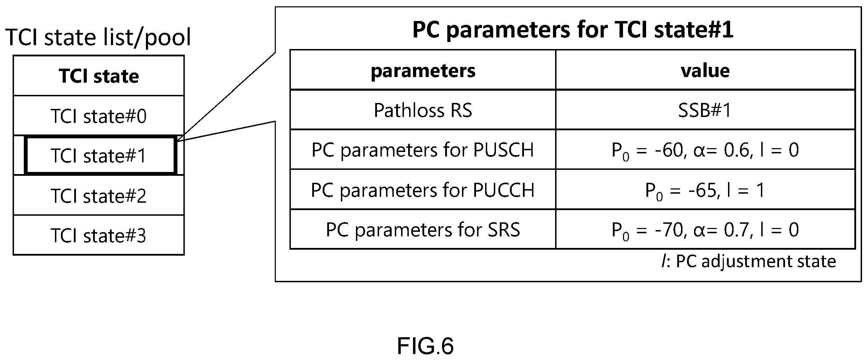

FIG. 6 is a diagram to show an example of power control parameters for TCI state. As shown in FIG. 6, a pathloss RS and the power control parameters for PUSCH/PUCCH/SRS are associated with the TCI state.

When a TCI state of Rel. 17 is configured, a TCI state and spatial relation information (except positioning) of Rel. 15/16 cannot be configured in the same band. For a channel/RS to which an indicated TCI state is not applied, a TCI state of Rel. 17 may be configured instead of a TCI state and spatial relation information of Rel. 15/16.

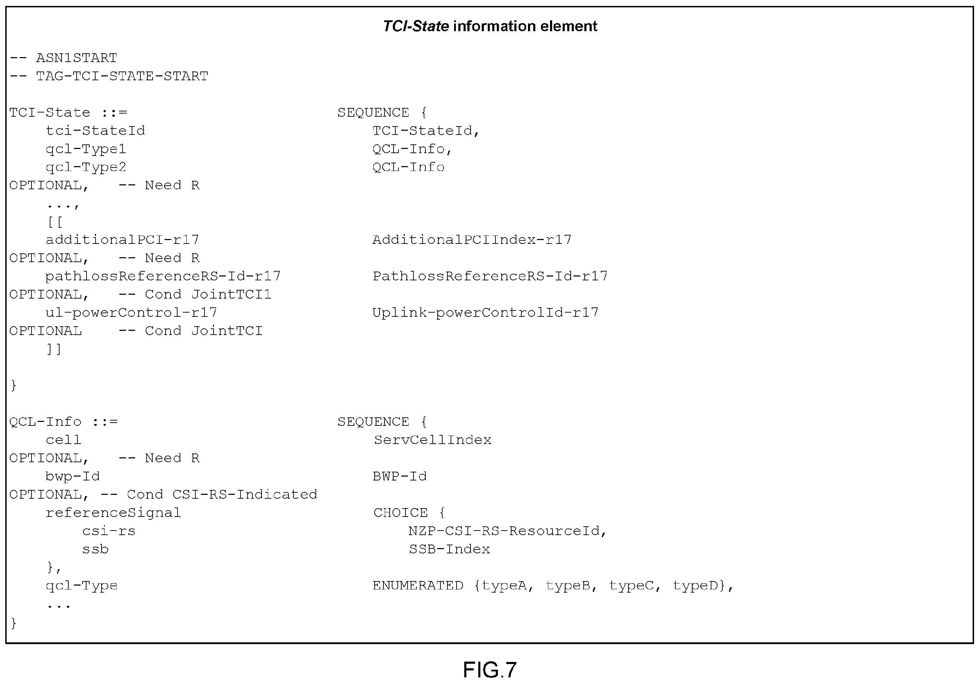

A UE may transmit UE capability information indicating that different power control parameters are associated with each TCI state. When the UE does not support this UE capability, a default power control parameter may be used. FIG. 7 is a diagram to show an example of a TCI-State information element of Rel. 17. A default power control parameter is, for example, the pathloss reference RS-ID (pathlossReferenceRS-Id-r17) in FIG. 7.

### (Unified/Common TCI Framework)

According to the unified TCI framework, a plurality of types (UL/DL) of channels/RSs can be controlled by a common framework. The unified TCI framework may indicate a common beam (common TCI state) and apply the common beam to all UL and DL channels, or may apply a common beam for UL to all UL channels while applying a common beam for DL to all DL channels, instead of defining a TCI state or a spatial relation for each channel as in Rel. 15.

One common beam for both DL and UL or a common beam for DL and a common beam for UL (two common beams in total) are under study.

The UE may assume the same TCI state (joint TCI state, joint TCI pool, joint common TCI pool, joint TCI state set) for UL and DL. The UE may assume different TCI states (separate TCI state, separate TCI pool, UL separate TCI pool and DL separate TCI pool, separate common TCI pool, UL common TCI pool and a DL common TCI pool) for each of UL and DL.

Default beams of UL and DL may be brought to match by beam management based on a MAC CE (MAC CE-level beam indication). A default TCI state for PDSCH may be updated to match a default UL beam (spatial relation).

A common beam/unified TCI state may be indicated from the same TCI pool (joint common TCI pool, joint TCI pool, set) for both UL and DL by DCI-based beam management (DCI-level beam indication). X (> 1) TCI states may be activated by the MAC CE. UL/DL DCI may select one from X active TCI states. The selected TCI state may be applied to both UL and DL channels/RSs.

The TCI pool (set) may be a plurality of TCI states configured by an RRC parameter, or may be a plurality of TCI states (active TCI states, active TCI pool, set) activated by a MAC CE among a plurality of TCI states configured by an RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥ 1) of TCI states (UL TCI states) applied to a UL channel/RS and the number M (≥ 1) of TCI states (DL TCI states) applied to a DL channel/RS may be defined. Notification/configuration/indication of at least one of N or M may be made to a UE by higher layer signaling or physical layer signaling.

In the present disclosure, when it is described as N = M = X (where X is any integer), this may mean that X TCI states (corresponding to X TRPs) common to UL and DL (joint TCI states) may be notified/configured/indicated to a UE. When N = X (X is any integer) and M = Y (Y is any integer, and M = Y may hold) are described, this may mean that X UL TCI states (corresponding to X TRPs) and Y DL TCI states (corresponding to Y TRPs) (i.e., separate TCI states) may be notified/configured/indicated to the UE.

For example, when it is described as N = M = 1, this may mean that one TCI state common to DL and UL for a single TRP is notified/configured/indicated to a UE (joint TCI state for a single TRP).

For example, when it is described as N = 1 and M = 1, this may mean that one UL TCI state and one DL TCI state for a single TRP are separately notified/configured/indicated to a UE (separate TCI states for a single TRP).

For example, when it is described as N = M = 2, this may mean that a plurality of (two) TCI states common to UL and DL for a plurality of (two) TRPs are notified/configured/indicated to a UE (joint TCI states for multi-TRP).

For example, when it is described as N = 2 and M = 2, this may mean that a plurality of (two) UL TCI states and a plurality of (two) DL TCI states for a plurality of (two) TRPs are notified/configured/indicated to a UE (separate TCI states for multi-TRP).

Note that, in the above examples, cases where the values of N and M are each one or two have been described, but the values of N and M may each be three or more, and N and M may be different from each other.

It is studied that N = M = 1 is supported in Rel. 17. It is studied that other cases are supported in Rel. 18 and later versions.

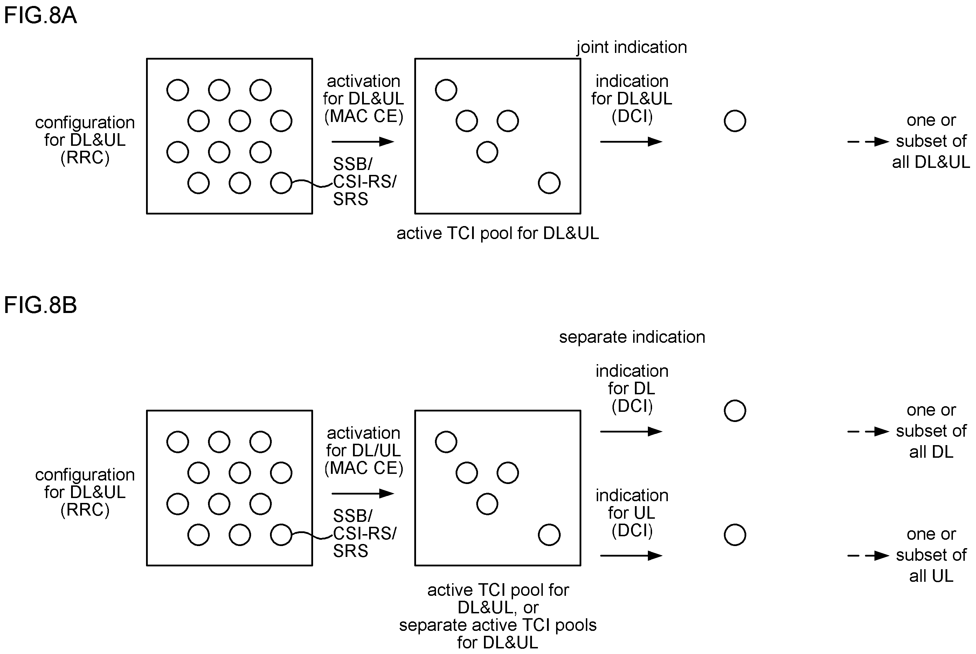

In the example in FIG. 8A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 8A, one dot may represent one TCI state applied to both UL and DL or may represent two respective TCI states applied to UL and DL.

At least one of the plurality of TCI states configured by the RRC parameter or the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 8B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 NR or later versions, it is assumed that activation/indication of beams to TCI states associated with different physical cell identifiers (PCIs) by a MAC CE/DCI is supported. In Rel-18 NR or later versions, it is assumed that indication of change of a serving cell to a cell having a different PCI by a MAC CE/DCI is supported.

### {Channel/RS Applied With Indicated TCI State in Rel. 17}

An indicated TCI state with a MAC CE/DCI may be applied to the following channels/RSs.

### {PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by a MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

### {PDSCH}

- The indicated TCI state is always applied to all the UE-dedicated PDSCHs.
- When followUnifiedTCIState is configured for a non-UE-dedicated PDSCH (a PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

### {CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

### {PUCCH}

- The indicated TCI state is always applied to all the dedicated PUCCH resources.

### {PUSCH}

The indicated TCI state is always applied to a dynamic/configured grant PUSCH.

### {SRS}

- When a unified TCI state is configured to be followed for an SRS resource set for an A-SRS for beam management usage and an A/SP/P-SRS for codebook (CB)/non-codebook (NCB)/antenna switching usage, the indicated TCI state is applied to the SRS resource set. A configured TCI state in the SRS resource set is applied to another SRS.

### {Channel/RS Applied With Indicated TCI State in Rel. 18}

When single-DCI multi-TRP is applied, an indicated TCI state may be applied to the following channels/RSs. Note that applyIndicatedTCIState = {1st, 2nd, both} in the following description is a parameter indicating that a first TCI state, a second TCI state, or both of the first TCI state and the second TCI state are applied.

### {PDCCH}

- followUnifiedTCIState is configured (unified TCI state is configured to be followed) for CORESET 0, and applyIndicatedTCIState = {1st, 2nd, both} is configured to indicate that the indicated TCI state is applied to the CORESET. Otherwise, a Rel-15 specification is applied to the CORESET. In other words, CORESET 0 follows a TCI state activated by a MAC CE, or is QCLed with an SSB.
- applyIndicatedTCIState = {1st, 2nd, both} is configured for each CORESET to indicate that the indicated TCI state is applied to a CORESET with USS/CSS type 3 and with an index other than index 0.
- When a unified TCI state is configured to be followed for a CORESET with at least a CSS of a type other than CSS type 3 and with an index other than index 0, applyIndicatedTCIState = {1st, 2nd, both} is configured for each CORESET to indicate that the indicated TCI state is applied to the CORESET. Otherwise, a configured TCI state for the CORESET is applied to the CORESET.

### {PDSCH}

- One or both of the indicated TCI states are always applied to all the UE-dedicated PDSCHs.
- In a case of a PDSCH scheduled/activated by DCI 1_1/1_2, a 2-bit TCI state selection field of this DCI 1_1/1_2 can indicate {1st, 2nd, both}. When the TCI state selection field is not configured, both of the indicated TCI states are applied.
- In a case of a PDSCH scheduled/activated by DCI 1_0, {1st, 2nd, both} is configured by RRC.
- "both" can be configured only when PDSCH-CJT or PDSCH-SFN is configured.

### {CSI-RS}

- When followUnifiedTCIState is configured for an A-CSI-RS for CSI acquisition or beam management (for a CORESET of a PDCCH for triggering the A-CSI-RS), applyIndicatedTCIState = {1st, 2nd, both} is configured for each CSI-RS resource or CSI-RS resource set to indicate that the indicated TCI state is applied to the A-CSI-RS. A configured TCI state for the CSI-RS resource is applied to another CSI-RS.

### {PUCCH}

- applyIndicatedTCIState = {1st, 2nd, both} is configured for each PUCCH resource/PUCCH resource group.

### {PUSCH}

The indicated TCI state is always applied to a dynamic/configured grant PUSCH.
- A first indicated TCI state is always applied to a PUSCH scheduled/activated by DCI 0_0.
- applyIndicatedTCIState = {1st, 2nd, both} is configured in a case of a type 1 CG PUSCH.
- An SRS resource set indication field indicates one of/both used SRS resource sets.

### {SRS}

- When a unified TCI state is configured to be followed for an SRS resource set for an A-SRS for beam management usage and an A/SP/P-SRS for codebook (CB)/non-codebook (NCB)/antenna switching usage, applyIndicatedTCIState = {1st, 2nd, both} is configured for each SRS resource set to indicate that the indicated TCI state is applied to the SRS resource set. A configured TCI state in the SRS resource set is applied to another SRS.

In the present disclosure, an indicated TCI state, a unified TCI state, a TCI state applied to a channel/signal configured to follow a unified TCI state, a TCI state applied to a UE-dedicated PDSCH and a CORESET/PDCCH associated with a USS, and a TCI state applied to a PUCCH and a PUSCH may be interchangeably interpreted.

### (UL Power Control Parameter of Unified TCI State in Rel. 17)

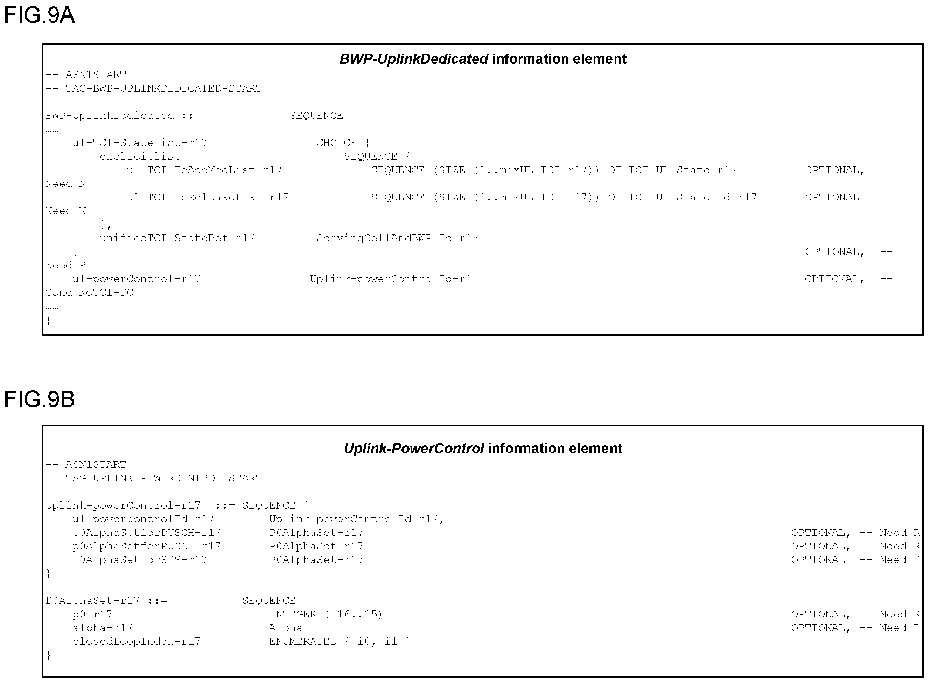

In a unified TCI state in Rel. 17, a UE is provided with a UL power control parameter (RRC information element "ul-powerControl-r17") included in a UE-specific UL BWP configuration (RRC information element "BWP-UplinkDedicated") (see FIG. 9A). When UL power control (ul-powerControl) for the UL TCI state/joint TCI state of a serving cell is not configured for the UE, the parameter is used for transmission power control of UL transmission.

The UL power control parameter (RRC information element "ul-powerControl-r17") supports a UL power control parameter ID (Uplink-powerControlId-r17), and the UL power control parameter is identified by the ID.

The UL power control parameter (RRC information element "uplink-powerControl-r17") corresponding to "ul-powerControl-r17" includes at least one of a set of P0 and α for PUSCH (p0AlphaSetforPUSCH-r17), a set of P0 and α for PUCCH (p0AlphaSetforPUCCH-r17), or a set of P0 and α for SRS (p0AlphaSetforSRS-r17), which are used for transmission power control of each channel/signal (see FIG. 9B).

In a Rel-17 unified TCI framework, RRC/MAC CE/DCI indicates one joint TCI or one set of {DL TCI, UL TCI} (separate TCIs). The indicated TCI is applied to a plurality of UL/DL channels/RSs.

### (Unified TCI State for Multi-TRP in Rel. 18)

For Rel. 18, a specification for unified TCI for multi-TRP has been enhanced. For example, in a case of single-DCI multi-TRP, a UE may be indicated with up to two joint TCIs or up to two sets of {DL TCI, UL TCI}, by RRC/MAC CE/DCI. For example, in a case of multi-DCI multi-TRP, the UE may be indicated with one joint TCI or one set of {DL TCI, UL TCI} per coresetPoolIndex, by RRC/MAC CE/DCI. The indicated TCI is applied to a plurality of UL/DL channels/RSs. Association of the first and second indicated TCIs with each UL/DL channel/RS may be predefined by a specification, may be configured by RRC signaling, or may be indicated by DCI.

### (Timing Advance)

Timing advance (TA) is used for UL timing adjustment. In an existing specification (Rel. 17), UL frame number i for transmission from a UE is started specific time (for example, T_{TA}) before a start of a corresponding DL frame.

The specific time may be, for example, T_{TA} = (N_{TA} + N_{TA,offset} + N^{common}_{TA,adj} + N^{UE}_{TA,adj})T_{c}. Nc^{ommonT}_{A,adj} and N^{UE}_{TA,adj} may be 0 when being used in an NTN (non-terrestrial network), irrespective of the examples of the present disclosure.

Here, N_{TA}, N_{TA,offset}, N^{common}_{TA,adj}, N^{UE}_{TA,adj}, and T_{C} may represent a timing advance between DL and UL, a fixed offset used for computation of a timing advance, a network-controlled timing correction, a UE-derived timing correction, and a basic time unit for NR, respectively.

For example, in random access preamble transmission and message A PUSCH transmission, N_{TA} is 0 and N_{TA,offset} is applied.

### (Timing Advance Group)

When a plurality of TRPs are used, the distance between a UE and each TRP is different for some cases. The plurality of TRPs may be included in the same cell (for example, a serving cell). Alternatively, among the plurality of TRPs, a certain TRP may correspond to the serving cell, and the other TRP(s) may correspond to a non-serving cell(s). The plurality of TRPs may include a DL transmission point and a UL reception point. In this case, it is also assumed that the distance between each TRP and the UE is different.

In existing systems, a transmission timing of a UL (Uplink) channel and/or a UL signal (UL channel/signal) is adjusted by timing advance. A reception timing of a UL channel/signal from a different user terminal (UE) is adjusted on the radio base station (also referred to as a TRP (Transmission and Reception Point), gNB (gNodeB), and the like)) side.

A UE may apply timing advance for each preconfigured timing advance group (TAG) (multiple timing advances) to perform timing control for UL transmission.

When the multiple timing advances is applied, timing advance groups (TAGs) classified according to transmission timing are supported. The UE may control UL transmission timing in each TAG by assuming that the same TA offset (or TA value) is applied for each TAG. In other words, the TA offset may be configured independently for each TAG.

When the multiple timing advances are applied, the UE independently adjusts transmission timing for the cells belonging to each TAG, thereby enabling a timing of uplink signal reception from the UE to be matched at a radio base station even when a plurality of cells are used.

A TAG (for example, serving cells belonging to the same TAG) may be configured by a higher layer parameter. The same timing advance value may be applied to the serving cells belonging to the same TAG (for example, serving cells configured with UL). A timing advance group including an SpCell of a MAC entity may be referred to as a primary timing advance group (PTAG), and a TAG other than the PTAG may be referred to as a secondary timing advance group (STAG). The maximum number of TAGs may be X (for example, X = 4) for each cell group (for example, MCG/SCG).

### (Transmission Power Control)

### <PUSCH Transmission Power Control>

In NR, the transmission power for a PUSCH is controlled based on a TPC command (also referred to as a value, an increase/decrease value, a correction value, or the like) indicated by a value of a field (also referred to as a TPC command field or the like) in DCI.

For example, in a case where a UE transmits a PUSCH on an active UL BWP b in a carrier f of a serving cell c by using a parameter set (open-loop parameter set) having index j and index l of a power control adjustment state (PUSCH power control adjustment state), the transmission power (P_{PUSCH,b,f,c}(i, j, q_{d}, l)) [dBm] for a PUSCH in a PUSCH transmission occasion (also referred to as a transmission period or the like) i may be based on at least one of P_{CMAX,f,c}(i), P_{O_PUSCH,b,f,c}(j), M^{PUSCH}_{RB,b,f,c}(i), α_{b,f,c}(j), PL_{b,f,c}(q_{d}), Δ_{TF,b,f,c}(i), or f_{b,f,c}(i, l), as described in (equation 1) below.$\begin{matrix}{P}_{PUSCH , b , f , c} \left(i, j, {q}_{d}, l\right) \\ = min \left\{\begin{matrix}{P}_{CMAX , f , c} \left(i\right) , \\ {P}_{O _ PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) \\ + {Δ}_{TF , b , f , c} \left(i\right) + {f}_{b , f , c} \left(i, l\right)\end{matrix}\right\} \\ \left[dBm\right]\end{matrix}$ (Equation 1)

The power control adjustment state may be referred to as a closed loop (CL)-power control (PC) state, a value based on a TPC command with power control adjustment state index l, the accumulated value of TPC commands, or a closed-loop value. l may be referred to as a closed-loop index.

PUSCH transmission occasion i is a period in which a PUSCH is transmitted and may be constituted by, for example, one or more symbols, one or more slots, or the like.

P_{CMAX,f,c}(i) is, for example, the maximum transmission power of a user terminal configured for the carrier f of the serving cell c in the transmission occasion i (configured maximum output power, UE configured maximum output power).

P_{O_PUSCH,b,f,c}(j) is, for example, a parameter related to a target received power configured for the active UL BWP b in the carrier f of the serving cell c in the transmission occasion i (for example, also referred to as a parameter related to a transmission power offset, a transmission power offset P0, a target received power parameter, and the like). PO_{_PUSCH,b,f,c(}j) may be the sum of P_{O_NOMINAL_PUSCH,f,c}(j) and P_{O_UE_PUSCH,b,f,c}(j).

M^{PUSCH}_{RB,b,f,c}(i) is, for example, the number of resource blocks (bandwidth) allocated to a PUSCH for the transmission occasion i in the active UL BWP b in the carrier f of the serving cell c with subcarrier spacing µ. αb_{,f,c(}j) is a value provided by a higher layer parameter (for example, also referred to as msg3-Alpha, p0-PUSCH-Alpha, a fractional factor, and the like).

PL_{b,f,c}(q_{d}) is, for example, pathloss (pathloss estimation [dB], pathloss compensation) calculated by the user terminal by using the index q_{d} of a reference signal (RS, pathloss reference RS, pathloss (PL)-RS, RS for pathloss reference, DL-RS for pathloss measurement, PUSCH-PathlossReferenceRS) for downlink BWP associated with the active UL BWP b in the carrier f of the serving cell c.

When the UE is not provided with a pathloss reference RS (for example, PUSCH-PathlossReferenceRS) or the UE is not provided with a dedicated higher layer parameter, the UE may calculate PL_{b,f,c}(q_{d}) by using an RS resource, based on a synchronization signal (SS)/physical broadcast channel (PBCH) block (SS block (SSB)) used for obtaining a Master Information Block (MIB).

When the UE is configured with RS resource indices up to the number corresponding to the value of the maximum number of pathloss reference RSs (for example, maxNrofPUSCH-PathlossReferenceRSs) and a set of RS configurations for each of the RS resource indices by pathloss reference RSs, the set of RS resource indices may include one of or both a set of SS/PBCH block indices and a set of channel state information (CSI)-reference signal (RS) resource indices. The UE may identify an RS resource index q_{d} in the set of RS resource indices.

When PUSCH transmission is scheduled by a Random Access Response (RAR) UL grant, the UE may use the same RS resource index q_{d} as that for corresponding PRACH transmission.

When the UE is provided with a configuration of power control of a PUSCH by a sounding reference signal (SRS) resource indicator (SRI) (for example, SRI-PUSCH-PowerControl) and is provided with one or more values of the ID(s) of pathloss reference RS(s), the UE may obtain mapping between a set of values for an SRI field in DCI format 0_1 and a set of ID value(s) of the pathloss reference RS(s) by higher layer signaling (for example, sri-PUSCH-PowerControl-Id in SRI-PUSCH-PowerControl). The UE may determine the RS resource index q_{d}, based on the ID of the pathloss reference RS mapped in the SRI field value in DCI format 0_1 for scheduling the PUSCH.

When the PUSCH transmission is scheduled by DCI format 0_0 and the UE is not provided with PUCCH spatial relation information for a PUCCH resource with the lowest index for the active UL BWP b in each carrier f and serving cell c, the UE may use the same RS resource index q_{d} as that for PUCCH transmission in the PUCCH resource.

When the PUSCH transmission is scheduled by DCI format 0_0 and the UE is not provided with spatial setting of the PUCCH transmission, when the PUSCH transmission is scheduled by DCI format 0_1 not including an SRI field, or when a configuration of power control of a PUSCH by an SRI is not provided to the UE, the UE may use the RS resource index q_{d} with the pathloss reference RS ID of zero.

When a configured grant configuration (for example, ConfiguredGrantConfig) includes a specific parameter (for example, rrc-ConfiguredUplinkGrant) for PUSCH transmission configured by the configured grant configuration, an RS resource index q_{d} may be provided to the UE by a pathloss reference index (for example, pathlossReferenceIndex) in the specific parameter.

When the configured grant configuration does not include the specific parameter for the PUSCH transmission configured by the configured grant configuration, the UE may determine the RS resource index q_{d}, based on the value of the ID of the pathloss reference RS mapped in the SRI field in the DCI format for activating the PUSCH transmission. When the DCI format does not include an SRI field, the UE may determine the RS resource index q_{d} with the pathloss reference RS ID of zero.

Δ_{TF,b,f,c}(i) is a transmission power adjustment component (offset, transmission format compensation) for the UL BWP b in the carrier f of the serving cell c.

f_{b,f,c}(i, l) is a PUSCH power control adjustment state for the active UL BWP b in the carrier f of the serving cell c in the transmission occasion i. fb_{,f,c(}i, l) may be based on δ_{PUSCH,b,f,c}(i, l).

When TPC accumulation is enabled, f_{b,f,c}(i, l) may be based on the accumulated value of δ_{PUSCH,b,f,c}(m, l).

When the TPC accumulation is disabled, f_{b,f,c}(i, l) may be δ_{PUSCH,b,f,c}(i, l) (an absolute value).

When information indicating disabling (disabled) of the TPC accumulation (TPC-Accumulation) is not configured (when the information indicating disabling of the TPC accumulation is not provided, when the TPC accumulation is configured to be enabled), the UE accumulates TPC command values and determines transmission power, based on a result of the accumulation (power control state) (applies the TPC command values via the accumulation).

When the information indicating disabling of the TPC accumulation (TPC-Accumulation) is configured (when the information indicating disabling of the TPC accumulation is provided, when the TPC accumulation is configured to be disabled), the UE determines transmission power, based on a TPC command value (power control state), without accumulating TPC command values (applies the TPC command value without using the accumulation).

δ_{PUSCH,b,f,c}(i, l) may be a TPC command value included in DCI format 0_0 or DCI format 0_1 for scheduling the PUSCH transmission occasion i on the active UL BWP b in the carrier f of the serving cell c, or a TPC command value coded by being combined with another TPC command in DCI format 2_2 having a CRC scrambled by a specific RNTI (Radio Network Temporary Identifier) (for example, a TPC-PUSCH-RNTI).

∑ₘ₌₀^{C(Di)-1}δ_{PUCCH,b,f,c}(m, l) may be the sum of TPC command values in set Dᵢ of TPC command values having cluster/cardinality C (Dᵢ). Dᵢ may be a set of TPC command values received by the UE for a PUSCH power control adjustment state l between timing K_{PUSCH}(i-i₀)-1 symbols before a PUSCH transmission occasion i-i₀ and timing K_{PUSCH}(i) symbols before a PUSCH transmission occasion i, on the active UL BWP b in the carrier f of the serving cell c. i0 may be the lowest positive integer that causes the timing K_{PUSCH}(i-i₀) symbols before the PUSCH transmission occasion i-i₀ to be earlier than the timing K_{PUSCH}(i) symbols before the PUSCH transmission occasion i.

If PUSCH transmission is scheduled by DCI format 0_0 or DCI format 0_1, K_{PUSCH}(i) may be the number of symbols in the active UL BWP b in the carrier f of the serving cell c after the last symbol for corresponding PDCCH reception and before the first symbol for the PUSCH transmission. If the PUSCH transmission is configured by configured grant configuration information (ConfiguredGrantConfig), K_{PUSCH}(i) may be the number of K_{PUSCH,min} symbols equal to the product of the number N_{symb}^{slot} of symbols per slot in the active UL BWP b in the carrier f of the serving cell c and a minimum value of a value provided by k2 in PUSCH-common configuration information (PUSCH-ConfigCommon).

For the power control adjustment state, whether to have a plurality of states (for example, two states) or have a single state may be configured by a higher layer parameter. In a case where a plurality of power control adjustment states are configured, one of the plurality of power control adjustment states may be identified by index l (for example, l ∈ {0, 1}).

### <SRS Transmission Power Control>

By using index l of a power control adjustment state (closed-loop state), the transmission power for an SRS (P_{SRS,b,f,c}(i, qₛ, l)) in an SRS transmission occasion (also referred to as a transmission period or the like) i for an active UL BWP b in a carrier f of a serving cell c is given by the following equation (equation 2), based on P_{CMAX,f,c}(i), P_{O_SRS,b,f,c}(qₛ), M_{SRS,b,f,c}(i), α_{SRS,b,f,c}(qₛ), PL_{b,f,c}(q_{d}), and h_{b,f,c}(i, l).$\begin{matrix}{P}_{SRS , b , f , c} \left(i, {q}_{s}, l\right) \\ = min \left\{\begin{matrix}{P}_{CMAX , f , c} \left(i\right) , \\ {P}_{O _ SRS , b , f , c} \left({q}_{s}\right) + 10 {log}_{10} \left({2}^{μ}⋅{M}_{SRS , b , f , c}\left(i\right)\right) \\ + {α}_{SRS , b , f , c} \left({q}_{s}\right) ⋅ {PL}_{b , f , c} \left({q}_{d}\right) + {h}_{b , f , c} \left(i, l\right)\end{matrix}\right\} \\ \left[dBm\right]\end{matrix}$ (Equation 2)

SRS transmission occasion i is a period in which an SRS is transmitted and may be constituted by, for example, one or more symbols, one or more slots, or the like.

Here, P_{CMAX,f,c}(i) is, for example, UE maximum output power for the carrier f of the serving cell c in the SRS transmission occasion i. PO_{_SRS,b,f,c(}qs₎ is a parameter (also referred to as, for example, a parameter related to a transmission power offset, a transmission power offset P0, or a target received power parameter) related to target received power provided by p0 for the active UL BWP b in the career f of the serving cell c and an SRS resource set qₛ (provided by SRS-ResourceSet and SRS-ResourceSetId).

M_{SRS,b,f,c}(i) is an SRS bandwidth expressed by the number of resource blocks for the SRS transmission occasion i on the active UL BWP b in the career f of the serving cell c with subcarrier spacing µ.

α_{SRS,b,f,c}(qₛ) is provided by α (for example, alpha) for the active UL BWP b in the carrier f of the serving cell c with the subcarrier spacing µ and the SRS resource set qₛ. α (for example, alpha) may be defined as a pathloss compensation factor for UL power control.

PL_{b,f,c}(q_{d}) is a DL pathloss estimate [dB] (pathloss estimation [dB], pathloss compensation) calculated by a UE by using an RS resource index q_{d}, for the active DL BWP in the serving cell c and the SRS resource set qₛ. The RS resource index q_{d} is a pathloss reference RS (provided by an RS for pathloss reference, a pathloss (PL)-RS, a DL-RS for pathloss measurement, for example, pathlossReferenceRS) associated with the SRS resource set qₛ, and is an SS/PBCH block index (for example, ssb-Index) or a CSI-RS resource index (for example, csi-RS-Index).

If the UE is not given pathloss reference RSs (pathlossReferenceRSs) or before the UE is given a dedicated higher layer parameter, the UE calculates PL_{b,f,c}(q_{d}) by using an RS resource obtained based on an SS/PBCH block used for the UE to acquire an MIB.

h_{b,f,c}(i, l) is an SRS power control adjustment state for the active UL BWP in the carrier f of the serving cell c in the SRS transmission occasion i. When the configurations of the SRS power control adjustment state (for example, srs-PowerControlAdjustmentStates) indicate the same power control adjustment state for SRS transmission and PUSCH transmission, h_{b,f,c}(i, l) is the current PUSCH power control adjustment state f_{b,f,c}(i, l). On the other hand, when the configurations of the SRS power control adjustment state indicate independent power control adjustment states for SRS transmission and PUSCH transmission, SRS power control adjustment state h_{b,f,c}(i) may be based on δ_{SRS,b,f,c}(m).

When TPC accumulation is enabled, h_{b,f,c}(i) may be based on the accumulated value of δ_{SRS,b,f,c}(m).

When the TPC accumulation is disabled, h_{b,f,c}(i) may be δ_{SRS,b,f,c}(i) (an absolute value).

Here, δ_{SRS,b,f,c}(m) may be a TPC command value coded by being combined with another TPC command in a PDCCH including DCI (for example, DCI format 2_3). Σm_{=0C}^{(Si)-1δ}S_{RS,b,f,c(}m) may be the sum of TPC commands in set Sᵢ of TPC command values with cardinality C (Sᵢ) received by the UE between timing K_{SRS}(i-i₀)-1 symbols before an SRS transmission occasion i-i₀ and timing K_{SRS}(i) symbols before an SRS transmission occasion i, on the active UL BWP b in the carrier f of the serving cell c with the subcarrier spacing µ. Here, i₀ may be the lowest positive integer that causes the timing K_{SRS}(i-i₀)-1 symbols before the SRS transmission occasion i-i₀ to be earlier than the timing K_{SRS}(i) symbols before the SRS transmission occasion i.

If SRS transmission is aperiodic, K_{SRS}(i) may be the number of symbols in the active UL BWP b in the carrier f of the serving cell c after the last symbol for a corresponding PDCCH for triggering the SRS transmission and before the first symbol for the SRS transmission. If the SRS transmission is semi-persistent or periodic, K_{SRS}(i) may be the number of K_{SRS,min} symbols equal to the product of the number N_{symb}^{slot} of symbols per slot in the active UL BWP b in the carrier f of the serving cell c and a minimum value of a value provided by k2 in PUSCH-common configuration information (PUSCH-ConfigCommon).

### (DCI Format 2_3)

DCI format 2_3 is used for transmission of a TPC command group for SRS transmission by one or a plurality of UEs. An SRS request may also be transmitted together with the TPC commands.

The following information is transmitted by DCI format 2_3 CRC scrambled by a TPC-SRS-RNTI.
- Block number 1, block number 2, ..., block number B. A starting position of a block is determined by a parameter "startingBitOfFormat2-3" or "startingBitOfFormat2-3SUL-v1530" provided by a higher layer for the UE configured with the block.

When the UE is configured with a higher layer parameter "srs-TPC-PDCCH-Group=typeA" for UL without a PUCCH and a PUSCH or for UL with SRS power control not associated with PUSCH power control, the higher layer configures one block to the UE and defines the following field for the block.
- SRS request: 0 or 2 bits. When the field is present, the field is interpreted according to a specific table.
- TPC command number 1, TPC command number 2, ..., TPC command number N. Each TPC command is applied to each UL carrier provided by a parameter "cc-IndexInOneCC-Set" of the higher layer.

When the UE is configured with a higher layer parameter "srs-TPC-PDCCH-Group=typeB" for UL without a PUCCH and a PUSCH or for UL with SRS power control not associated with PUSCH power control, the higher layer configures, to the UE, one or a plurality of blocks each of which is applied to a UL carrier, and defines the following field for each block.
- SRS request: 0 bits or 2 bits. When the field is present, the field is interpreted according to a specific table.
- TPC command: 2 bits.

The number of information bits of format 2_3 is required to be less than or equal to the payload size of format 1_0 monitored in a common search space in the same serving cell. When the number of information bits of format 2_3 is less than the payload size of format 1_0 monitored in the common search space in the same serving cell, it is required to add zero to format 2_3 until the payload size becomes equal to the payload size of format 1_0 monitored in the common search space in the same serving cell.

### (SRS Switching)

DCI format 2_3 is applied to an uplink carrier of a serving cell in which the UE is not configured for PUSCH/PUCCH transmission or to an uplink carrier of a serving cell in which srs-PowerControlAdjustmentStates indicates dedicated power control adjustment states for SRS transmission and PUSCH transmission. The UE configured with a parameter "carrierSwitching" by the higher layer is provided with (1) to (7) below.

(1) A TPC-SRS-RNTI of DCI format 2_3 with a parameter "tpc-SRS-RNTI."
(2) An index, by a parameter "srs-SwitchFromServCellIndex," of a serving cell in which the UE interrupts transmission to transmit an SRS in one or a plurality of other serving cells.
(3) An indication, by a parameter "srs-SwitchFromCarrier," of an uplink carrier in which the UE interrupts transmission to transmit an SRS in one or a plurality of other serving cells.
(4) A DCI format 2_3 field configuration type with type A or type B. In a case of typeA, an index of a serving cell set is provided by cc-SetIndex, an index of a serving cell of the serving cell set is provided by cc-IndexInOneCC-Set, and a DCI format 2_3 field includes a TPC command for each serving cell of the serving cell set and can also include an SRS request for SRS transmission on the serving cell set. In a case of type B, the DCI format 2_3 field includes a TPC command for a serving cell index and can include an SRS request for SRS transmission on a serving cell.
(5) An indication, to a serving cell, of whether the DCI format 2_3 field includes an SRS request based on fieldTypeFormat2-3. A value of 0/1 in the indication indicates the absence/presence of the SRS request. Mapping between the 2-bit SRS request and an SRS resource set is as defined in a specification.
(6) An index, by startingBitOfFormat2-3, for the position, in DCI format 2_3, of the first bit of a field for a non-complementary uplink carrier of a serving cell.
(7) An index, by startingBitOfFormat2-3SUL-v1530, for the position, in DCI format 2_3, of the first bit of a field for a complementary uplink carrier of a serving cell.

### (Two Closed Loop Power Control (CL-PC) Adjustment States for PUSCH)

A higher layer parameter related to PUSCH power control (PUSCH-PowerControl) includes the size of twoPUSCH-PC-AdjustmentStates, sri-PUSCH-PowerControlId. A higher layer parameter related to PUSCH power control by an SRI (SRI-PUSCH-PowerCotrol) includes sri-PUSCH-PowerControlId, sri-PUSCH-ClosedLoopIndex. When twoPUSCH-PC-AdjustmentStates is configured, the UE can be configured with l = {0, 1} in sri-PUSCH-ClosedLoopIndex.

sri-PUSCH-ClosedLoopIndex is applied only to a PUSCH. The UE determines, based on an SRI, whether closedLoopIndex for a scheduled PUSCH is 0 or 1. However, closedLoopIndex for an indicated CB/NCB SRS follows configuration of srs-PowerControlAdjustmentStates.

When two SRS resource sets for CB/NCB usage (usage = CB/NCB) are configured, the respective SRS resource sets correspond to l = {0, 1}. In other words, one of the SRS resource sets corresponds to l = 0 and the other of the SRS resource sets corresponds to l = 1.

### (CL-PC Adjustment States for SRS)

CL-PC adjustment states for an SRS are defined according to at least one of cases 1 to 3 below.

### <Case 1>

When srs-PowerControlAdjustmentStates = absent or sameAsFci2 (in a case of following a CL-PC adjustment state for a PUSCH), the UE may apply the same CL-PC adjustment state as that for the

PUSCH.

### <Case 2>

When srs-PowerControlAdjustmentStates = separateClosedLoop, and tpc-Accumulation is not provided (when SRS-specific CL-PC adjustment states are configured, and TPC accumulation is not configured), the UE may judge/determine/apply a CL-PC adjustment state for the SRS in consideration of (based on) the sum of TPC commands for the SRS jointly coded by DCI format 2_3.

### <Case 3>

When srs-PowerControlAdjustmentStates = separateClosedLoop, and tpc-Accumulation is provided (when SRS-specific CL-PC adjustment states are configured, and TPC accumulation is configured), the UE may apply, as a CL-PC adjustment state for the SRS, TPC commands for the SRS jointly coded by DCI format 2_3.

### (Analysis)

As described above, it is studied that, to enhance UL coverage, a UL reception point is provided in addition to typical transmission/reception points. UL dense deployment/Heterogeneous Network (HetNet) using a DL transmission point (TRP)/macro Base Station (BS) and a UL reception point (TRP)/micro BS, and the like are also under study.

However, in a certain case (for example, a case where an RS for pathloss (PL) calculation (pathloss RS) is transmitted from a DL transmission point), it remains unclear how to determine transmission power when a terminal performs UL transmission (for example, SRS) to a UL/DL TRP. Unless the UL transmission power can be appropriately controlled, throughput reduction may occur.

Thus, the inventors of the present invention came up with the idea of a method for enabling appropriate control of UL transmission power.

Embodiments according to the present disclosure will be described in detail with reference to the drawings as follows. The radio communication methods according to respective embodiments may each be employed individually, or may be employed in combination.

### (Various Interpretations)

In the present disclosure, the word enclosed by "()" in a sentence may indicate description (for example, description of the spelling), interpretation, a specific example, supplementary description, or the like of the word immediately before it. In the present disclosure, regarding the word enclosed by "[]" in a sentence, the meaning of the whole sentence including it may be interpreted, or the meaning of the whole sentence excluding (ignoring) it may be interpreted. Note that "()" and "[]" may be used for usages/meanings other than these.

In the present disclosure, "A/B" and "at least one of A or B" may be interchangeably interpreted. In the present disclosure, "A/B/C" may mean "at least one of A, B, or C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, drop, stop, cancel, puncture, rate match, postpone, not transmit, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a single TRP, a channel/signal using a single TRP, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, multi-TRP, a channel/signal using multi-TRP, a channel using a plurality of TCI states/spatial relations, multi-TRP being enabled by RRC/DCI, a plurality of TCI states/spatial relations being enabled by RRC/DCI, and at least one of multi-TRP based on single DCI or multi-TRP based on multi-DCI may be interchangeably interpreted.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be interchangeably interpreted.

In the present disclosure, a cell, a PCI, a serving cell, a source serving cell, a source cell, a CC, a BWP, a BWP in a CC, and a band may be interchangeably interpreted. In the present disclosure, a cell, a PCI, a cell with an additional PCI, an additional cell, another cell, a non-serving cell, a cell having a different PCI, a candidate cell, a candidate serving cell, a cell having a PCI different from a PCI of a current serving cell, another serving cell, a target cell, a neighbour cell, and an inter-RAT neighbour cell may be interchangeably interpreted. The target cell may be a cell selected from a plurality of candidate cells. In the present disclosure, switching, change, and update may be interchangeably interpreted. A serving cell may be interpreted as a serving cell before switching or a serving cell after switching.

A UL reception point may be connected to a TRP (for example, a base station or the like) or a core network via a wired connection or a wireless connection. The UL reception point may be treated as a network (NW) or a base station. The UL reception point may be capable of transmitting a downlink (DL) signal (for example, a PL value), and may be applied to a base station forming a macro cell. For example, the UL reception point may not transmit downlink data, and may transmit a control signal/channel.

In the present disclosure, a base station, a TRP, a UL reception point, a UL TRP, a UL-only TRP, a micro cell, a micro BS, and a micro TRP may be interchangeably interpreted. The UL reception point primarily performs UL reception. The UL reception point may perform only UL reception, or may perform UL reception and DL transmission.

In the present disclosure, a base station, a TRP, a DL transmission point, a DL TRP, a DL-only TRP, a UL/DL TRP, a macro cell, a macro BS, a macro TRP, and a central TRP may be interchangeably interpreted. The DL transmission point primarily performs DL transmission. The DL transmission point may perform only DL transmission, or may perform UL reception and DL transmission.

In the present disclosure, UL dense deployment, a distributed TRP mode, a separated location mode of a transmission/reception point, a distributed transmission/reception mode, a separated TRP mode, TRP type 1, TRP type 2, TRP type A, and TRP type B may be interchangeably interpreted.

The present disclosure may presuppose a single TRP, multi-DCI based multi-TRP, single-DCI based multi-TRP, or at least one of scenario 1 or scenario 2 above.

In the present disclosure, being configured and receiving a configuration (configuration information) may be interchangeably interpreted.

In the present disclosure, a TCI, a TCI state, a TCI state ID, a TCI state list/set/pool/group, and a TCI state list/set/pool/group ID may be interchangeably interpreted.

In the present disclosure, one set of TCI states (separate TCI states) may mean a set of UL TCI state(s) and DL TCI state(s). The TCI state may mean a TCI-State information element that is an RRC information element.

In the present disclosure, an indicated TCI state, a unified TCI state, a unified TCI state in which multi-TRP is not configured/used/applied, a unified TCI state defined in Rel. 17, a Rel-17 unified TCI state, and a first unified TCI state may be interchangeably interpreted.

In the present disclosure, an indicated TCI state, a unified TCI state, a unified TCI state in which multi-TRP is configured/used/applied, a unified TCI state in which multi-TRP can be configured/used/applied, an indicated TCI state in which multi-TRP is configured/used/applied, an indicated TCI state in which multi-TRP can be configured/used/applied, a unified TCI state defined in Rel. 18, a Rel-18 unified TCI state, a unified TCI state for multi-TRP, and a second unified TCI state may be interchangeably interpreted.

In the present disclosure, a TCI state indicated by DCI, an indicated TCI state, a unified TCI state, a TCI state applied to a plurality of types of channels/signals, a joint TCI state (for DL and UL), a DL TCI state, a UL TCI state, a Rel-17 TCI state, a common TCI state, a single configured unified TCI state, and a single activated unified TCI state may be interchangeably interpreted.

In the present disclosure, a TCI state configured by an RRC parameter, a configured TCI state, a TCI state not following a unified TCI state, a TCI state other than a unified TCI state, a TCI state/spatial relation configured for a specific channel/signal, and a dedicated TCI state may be interchangeably interpreted.

A unified/common TCI state may mean an indicated TCI state indicated by using DCI/MAC CE/RRC (of Rel. 17).

The indicated TCI state may be shared with at least one of UE-specific reception in a PDSCH/PDCCH (updated by using DCI/MAC CE/RRC of Rel. 17), a dynamic grant (DCI)/configured grant PUSCH, or a plurality of (for example, all) dedicated PUCCH resources. A TCI state indicated by DCI/MAC CE/RRC may be referred to as an indicated TCI state.

When an indicated TCI state is supported (in Rel. 17), a TCI state other than a unified TCI state may mean a TCI state (configured TCI state) configured by using a MAC CE/RRC (of Rel. 17).

The configured TCI state may not be shared with at least one of UE-specific reception in a PDSCH/PDCCH (updated by using DCI/MAC CE/RRC of Rel. 17), a dynamic grant (DCI)/configured grant PUSCH, or a plurality of (for example, all) dedicated PUCCH resources. The configured TCI state may be configured by RRC/MAC CE for each CORESET/each resource/each resource set, and may not be updated even when the above-described indicated TCI state is updated.

In the present disclosure, a first TCI state may correspond to a first TRP. In the present disclosure, a second TCI state may correspond to a second TRP. In the present disclosure, an n-th TCI state may correspond to an n-th TRP.

In the present disclosure, a value of a first CORESET pool index (for example, 0), a value of a first TRP index (for example, 1), and a first TCI state (first DL/UL (joint/separate) TCI state) may correspond to each other. In the present disclosure, a value of a second CORESET pool index (for example, 1), a value of a second TRP index (for example, 2), and a second TCI state (second DL/UL (joint/separate) TCI state) may correspond to each other.

In the present disclosure, a TA, a TAG, and a TA offset value may be interchangeably interpreted. DL reference timing and DL reception timing may be interchangeably interpreted. Two TAs/TAGs may be interpreted as more than two TAs/TAGs.

In the present disclosure, absolute PL, pathloss (PL), a pathloss value, and a pathloss parameter may be interchangeably interpreted. In the present disclosure, relative PL, delta PL, a PL offset, an offset of P_{O}, an offset of α, an offset of power/power density [x dBm], pathloss (PL), a PL value, and a PL parameter may be interchangeably interpreted. In the present disclosure, PL, a PL value, a PL RS, and a PL RSID may be interchangeably interpreted.

In the present disclosure, use of a relative PL (PL offset) value may mean that a PL value obtained by applying (adding or subtracting) a received (configured) relative PL (PL offset) value to a PL value estimated based on a DL RS transmitted from a macro TRP is used for calculation of transmission power for a UL signal to be transmitted to a UL reception point.

In the present disclosure, an SRS may be at least one of an aperiodic (A)-SRS, a periodic (P)-SRS, or a semi-persistent (SP)-SRS.

In the present disclosure, a path loss reference RS, a path loss reference RS for PUSCH, a path loss reference RS for PUCCH, a path loss reference RS for SRS, an SSB, a CSI-RS, and an RS may be interchangeably interpreted. In the present disclosure, a path loss (PL), a path loss value, and a path loss parameter may be interchangeably interpreted.

In the present disclosure, a base station, a UL reception point, a UL TRP, a UL-only TRP, and a micro BS may be interchangeably interpreted. The UL reception point may perform only UL reception, or may perform DL transmission when a condition is satisfied.

In the present disclosure, a base station, a DL transmission point, a DL TRP, a DL-only TRP, a macro BS, and a central TRP may be interchangeably interpreted. The DL transmission point may perform only DL transmission, or may perform UL reception when a condition is satisfied.

In the present disclosure, a TA, a TAG, and a TA offset value may be interchangeably interpreted. DL reference timing and DL reception timing may be interchangeably interpreted. Two TAs/TAGs may be interpreted as more than two TAs/TAGs.

In the present disclosure, coresetPoolIndex, a CORESET pool index, and an RRC parameter indicating a CORESET pool index may be interchangeably interpreted. n-TimingAdvanceOffset and a TA offset may be interchangeably interpreted. TCI-UL-State, a UL TCI state, and an RRC parameter indicating a UL TCI state may be interchangeably interpreted. dl-OrJointTCI-StateList, a list of DL or joint TCI states, and an RRC parameter indicating a list of DL or joint TCI states may be interchangeably interpreted. ul-TCI-StateList, a list of UL TCI states, and an RRC parameter indicating a list of UL TCI states may be interchangeably interpreted. n-TimingAdvanceOffset, n-TimingAdvanceOffset2 may be interpreted as a TA offset, an RRC parameter indicating a TA offset.

DL sTRP/UL mTRP may mean, for example, a scenario applied in Rel. 19. The DL sTRP/UL mTRP may be, for example, scenario 1 (FIG. 1B) or scenario 2 (FIG. 2) above. Asymmetric DL sTRP/UL mTRP and DL sTRP/UL mTRP may be interchangeably interpreted.

In the present disclosure, a resource set and a resource may be interchangeably interpreted.

In the present disclosure, SRS #X, SRS resource set #X, and SRS resource #X may be interchangeably interpreted.

In the present disclosure, a CC and a BWP may be interchangeably interpreted.

In the present disclosure, a CL-PC adjustment state separate from that for a PUSCH and an SRS-specific (dedicated) CL-PC adjustment state may be interchangeably interpreted.

### (Radio Communication Method)

The respective embodiments of the present disclosure can be broadly classified as follows.
- Zeroth embodiment: Closed-Loop power control (CL-PC) adjustment state for SRS
- First embodiment: CL-PC adjustment state for SRS in case 1
- Second embodiment: CL-PC adjustment state for SRS in case 2
- Third embodiment: CL-PC adjustment state for SRS in case 3
- Fourth embodiment: Variations of CL-PC adjustment states l, k
- Fifth embodiment: Method of configuring CL-PC adjustment state for SRS
- Sixth embodiment: TPC command in DCI format 2_3
- Seventh embodiment: SRS resource set.

The embodiments will be described below based on these.

A UE may perform UL transmission control (SRS power control) by applying operation of each embodiment to be described below. A NW/BS/gNB may provide/transmit, for/to the UE, a configuration/indication and the like for the UE to implement the control.

In the present disclosure, configuration/indication for an SRS may be performed in units of (per) a resource set or in units of (per) a resource. In other words, in the present disclosure, a resource set and a resource may be interchangeably interpreted.

In the present disclosure, configuration/indication for an SRS may be performed in units of (per) a CC or in units of (per) a BWP. In other words, a CC and a BWP may be interchangeably interpreted.

In the present disclosure, the embodiments/options may each be employed individually, or two or more of the embodiments/options may be employed in combination.

### <Zeroth Embodiment>

The zeroth embodiment relates to a closed-loop power control (CL-PC) adjustment state for an SRS.

### <<Asymmetric DL sTRP/UL mTRP Deployment Scenario>>

In the present disclosure, in enhancement of an asymmetric DL sTRP/UL mTRP deployment scenario, the following may be assumed.
- Existing cell definition not to be changed
- New cell definition (for example, UL dedicate cell) not being required
- A unified TCI framework (Rel. 17/18)
- Use of existing definition of QCL/UL spatial relation
- FR1/FR2 as a target

### (Assumed Scenario)

In the present disclosure, the following scenario may be assumed.
- A UE receives a DL signal (including, for example, a PL-RS) from one DL TRP.
- The UE transmits a UL signal to a plurality of UL TRPs.

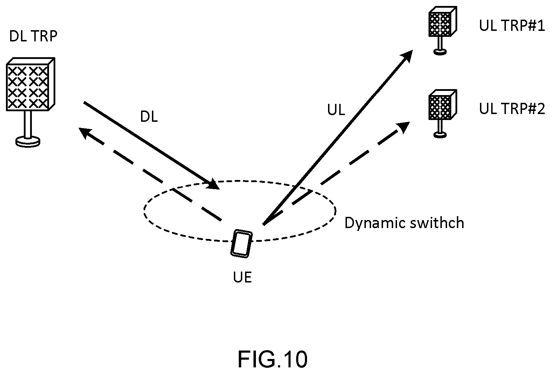

FIG. 10 is a conceptual diagram to show an example of the asymmetric DL sTRP/UL mTRP deployment scenario. As shown in FIG. 10, the UE receives a DL signal from one DL TRP. The UE may transmit a UL signal to the DL TRP/a plurality of UL TRPs (UL TRPs #1 and #2). In this case, the UE may dynamically switch which TRP the UL signal is to be transmitted to, according to, for example, an indicated TCI state.

### (Unified TCI framework)

In the present disclosure (in the asymmetric DL sTRP/UL mTRP deployment scenario), a unified TCI framework for Rel. 17/18 may be supported. Examples of supported (intra-cell/inter-cell) scenarios will be described below.

### <Intra-Cell Scenario>

- Unified TCI (Rel. 17) for single TRP may be supported only for one UL TRP.
- Unified TCI (Rel. 18) for single-DCI multi-TRP may be supported for a plurality of UL TRPs.
- Unified TCI (Rel. 18) for multi-DCI multi-TRP may not be supported.

### <Inter-Cell Scenario>

- Unified TCI (Rel. 17) for single TRP may be supported in an inter-cell scenario (Inter cell beam management (ICBM) of Rel. 17).
- Unified TCI (Rel. 18) for single-DCI multi-TRP may not be supported.
- Unified TCI (Rel. 18) for multi-DCI multi-TRP may be supported for inter-cell multi-TRP of Rel. 17.

### (DCI Format 2_3)

As described above, DCI format 2_3 is used only for SRS carrier switching. For example, DCI format 2_3 can be used according to the following conditions.

### <Condition 1>

The UE is configured with a higher layer parameter "srs-TPC-PDCCH-Group=typeA" for UL without a PUCCH and a PUSCH or for UL with SRS power control not associated with PUSCH power control.

### <Condition 2>

The UE is configured with a higher layer parameter "srs-TPC-PDCCH-Group=typeB" for UL without a PUCCH and a PUSCH or for UL with SRS power control not associated with PUSCH power control.

Or,
<Condition A>
   Carrier switching without a PUCCH/PUSCH on a carrier.
<Condition B>
   Carrier switching for which a power control adjustment state separate (independent/dedicated) from that for a PUSCH is configured for an SRS.

### <<Embodiment 0-0>>

According to a specification for Rel. 18, when srs-PowerControlAdjustmentStates = separateClosedLoop is configured, only one closed-loop power control (CL-PC) adjustment state for an SRS is present separately from that for a PUSCH. The CL-PC adjustment state can be controlled by DCI format 2_3.

The UE can be configured with one or a plurality of (two) CL-PC adjustment states for the SRS. The one or plurality of (two) CL-PC adjustment states can be configured separately from that for the PUSCH.

A higher layer parameter "srs-PowerControlAdjustmentStates" indicates whether twoPUSCH-PC-AdjustmentStates (one/two PUSCH power control adjustment states) or another closed-loop power control adjustment state is configured for the SRS. The higher layer parameter may be applied only to UL on which the UE also transmits the PUSCH. When the higher layer parameter is absent/released, the UE may apply a value of sameAs-Fci1.

In other words, in a case where the SRS follows a CL-PC adjustment state for the PUSCH, the higher layer parameter "srs-PowerControlAdjustmentStates" may, when two CL-PC adjustment states are present for the PUSCH, indicate which of the CL-PC adjustment states is to be followed.

For example, if srs-PowerControlAdjustmentStates = absent, the SRS follows one of the CL-PC adjustment states (Fci1) for the PUSCH, if srs-PowerControlAdjustmentStates = absent, the SRS follows one of the CL-PC adjustment states (Fci1), and if srs-PowerControlAdjustmentStates = sameAsFci2, the SRS follows the other of the CL-PC adjustment states (Fci2) for the PUSCH. If srs-PowerControlAdjustmentStates = separateClosedLoop, the SRS follows a dedicated (specific) CL-PC adjustment state.

Note that srs-PowerControlAdjustmentStates = separateClosedLoop may be applied only for the purpose of SRS carrier switching.

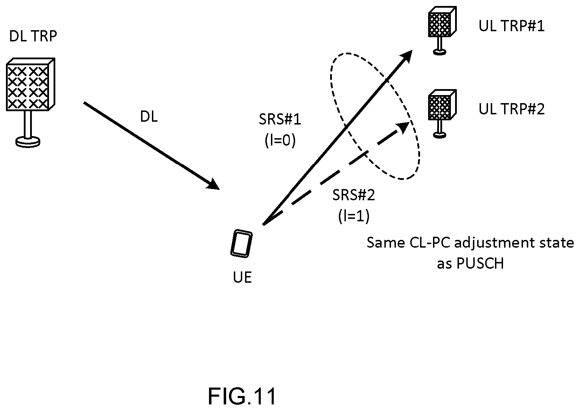

FIG. 11 is a conceptual diagram to show an example of SRS transmission according to embodiment 0-0. As shown in FIG. 11, when srs-PowerControlAdjustmentStates = absent or "sameAsFci2" is configured to the UE, the UE may transmit SRS #1 (l = 0) to UL TRP #1 and transmit SRS #2 (l = 1) to UL TRP #2. In this case, the UE may apply, to the transmission of SRSs #1 and #2, the same CL-PC adjustment state (l = 0, 1) as that for the PUSCH.

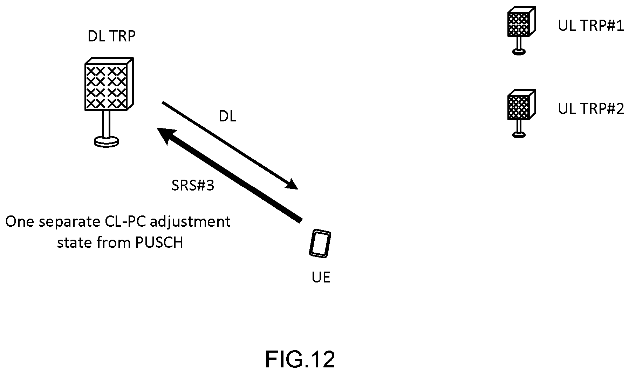

FIG. 12 is a conceptual diagram to show another example of the SRS transmission according to embodiment 0-0. As shown in FIG. 12, when srs-PowerControlAdjustmentStates = separateClosedLoop is configured to the UE, the UE may transmit SRS #3 to a DL TRP. In this case, the UE may apply, to the transmission of SRS #3, one CL-PC adjustment state separate from that for the PUSCH (independent of the PUSCH).

### <<Embodiment 0-1>>

As described above, according to the specification for Rel. 18, srs-PowerControlAdjustmentStates can be configured for (per) an SRS resource set. Thus, even when different (a plurality of) SRS resource sets are configured, it is not allowed to use, in a certain CC/BWP, both the same CL-PC adjustment state as that for the PUSCH and a separate CL-PC adjustment state from that for the PUSCH.

Specifically, when separateClosedLoop is configured/indicated for a certain CC dedicated to SRS carrier switching without the PUSCH, a CL-PC adjustment state separate from that for the PUSCH and the same CL-PC adjustment state as that for the PUSCH are not configured in the certain [same] CC/BWP even when different resource sets are configured. Thus, the following will be proposed.

The UE can be configured with one CL-PC adjustment state separate from that for the PUSCH or a plurality of (two) same CL-PC adjustment states as that for the PUSCH, for the SRS.

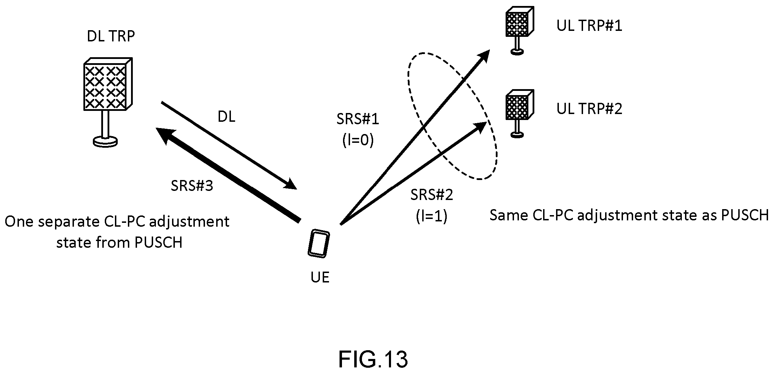

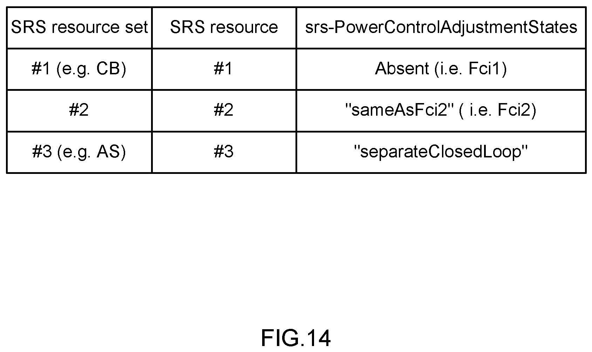

FIG. 13 is a conceptual diagram to show an example of SRS transmission according to embodiment 0-1. FIG. 14 is a diagram to show an example of SRS configuration according to embodiment 0-1.

As shown in FIG. 13, the UE may transmit SRS #1 (l = 0) to UL TRP #1 and transmit SRS #2 (l = 1) to UL TRP #2. In this case, the UE may apply, to the transmission of SRSs #1 and #2, the same CL-PC adjustment state (l = 0, 1) as that for the PUSCH.

The UE may transmit SRS #3 to a DL TRP. In this case, the UE may apply, to the transmission of SRS #3, one CL-PC adjustment state separate from that for the PUSCH (independent of the PUSCH).

In this manner, the UE may be configured with a plurality of (two) same CL-PC adjustment states as that for the PUSCH and a CL-PC adjustment state separate from that for the PUSCH, for SRSs (#1 to #3), in one certain CC/BWP.

As shown in FIG. 14, SRS resource set #1 (for example, for codebook (CB) usage) corresponds to SRS resource #1, and a power control adjustment state therefor can be configured, for example, as Fci1 (srs-PowerControlAdjustmentStates = absent). SRS resource set #2 corresponds to SRS resource #2, and a power control adjustment state therefor can be configured, for example, as Fci2 (srs-PowerControlAdjustmentStates = sameAsFci2). SRS resource set #3 (for example, for antenna switching (AS) usage) corresponds to SRS resource #3, and a power control adjustment state therefor can be configured, for example, as a separate closed loop (srs-PowerControlAdjustmentStates = separateClosedLoop).

### <<Embodiment 0-2>>

As described above, according to the specification for Rel. 18, the UE can be configured with both of the power control adjustment states l = {0, 1} for different SRS resource sets. In other words, the UE can be configured with the same CL-PC adjustment state as that for the PUSCH in a certain CC.

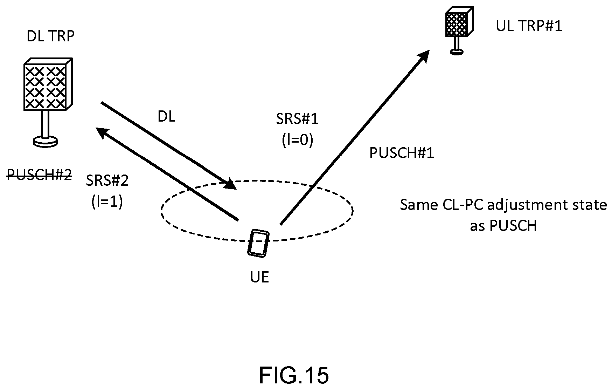

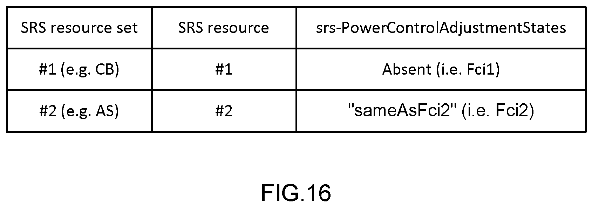

FIG. 15 is a conceptual diagram to show an example of SRS transmission according to embodiment 0-2. FIG. 16 is a diagram to show an example of SRS configuration according to embodiment 0-2.

As shown in FIG. 15, the UE may transmit SRS #1 (l = 0) to UL TRP #1 and transmit SRS #2 (l = 1) to a DL TRP. In this case, the UE may apply, to the transmission of SRSs #1 and #2, the same CL-PC adjustment state (l = 0, 1) as that for the PUSCH.

As shown in FIG. 16, SRS resource set #1 (for example, for CB usage) corresponds to SRS resource #1, and a power control adjustment state therefor can be configured, for example, as Fci1 (srs-PowerControlAdjustmentStates = absent). SRS resource set #2 (for example, for AS usage) corresponds to SRS resource #2, and a power control adjustment state therefor can be configured, for example, as Fci2 (srs-PowerControlAdjustmentStates = sameAsFci2).

However, in this case, TPC commands for SRS #1 and SRS #2 can be tight with respect to TPC commands for PUSCH #1 (PUSCH to UL TRP #1) and PUSCH #2 (PUSCH to the DL TRP) (these TPC commands are associated with each other).

In other words, when the UE does not transmit PUSCH #2, indication of a TPC command for SRS #2 is unavailable.

### <<Embodiment 0-3>>

In view of embodiment 0-2 described above, the UE can be configured with one or a plurality of (two) SRS resource sets having the same CL-PC adjustment state as that for the PUSCH and one SRS resource set having a CL-PC adjustment state separate from that for the PUSCH, for each CC/BWP.

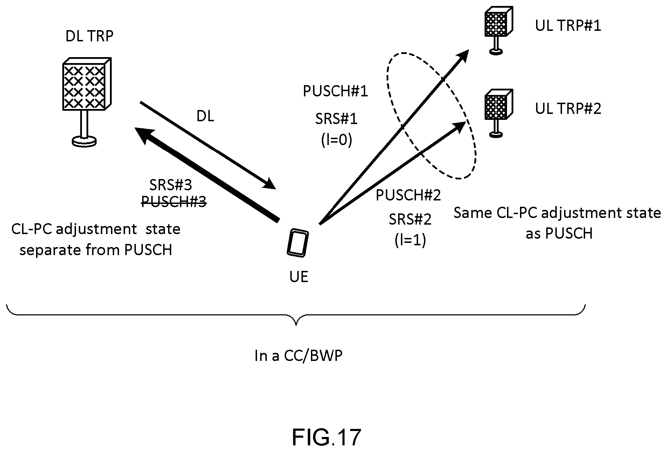

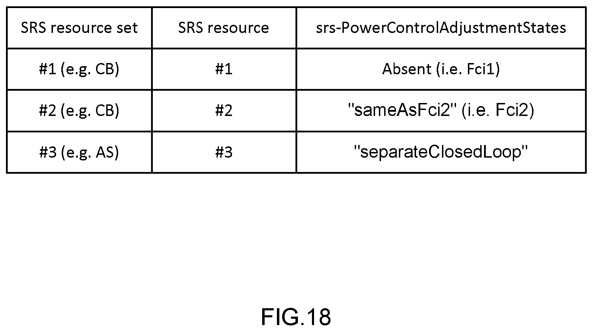

FIG. 17 is a conceptual diagram to show an example of SRS transmission according to embodiment 0-3. FIG. 18 is a diagram to show an example of SRS configuration according to embodiment 0-3.

As shown in FIG. 17, the UE may transmit SRS #1 (l = 0) to UL TRP #1 and transmit SRS #2 (l = 1) to UL TRP #2. In this case, the UE may apply, to the transmission of SRSs #1 and #2, the same CL-PC adjustment state (l = 0, 1) as that for the PUSCH.

The UE may transmit SRS #3 to a DL TRP. In this case, the UE may apply, to the transmission of SRS #3, one CL-PC adjustment state separate from that for the PUSCH (independent of the PUSCH).

In this manner, the UE may be configured with a plurality of (two) same CL-PC adjustment states as that for the PUSCH and a CL-PC adjustment state separate from that for the PUSCH, for SRSs (#1 to #3), in one certain CC/BWP.

As shown in FIG. 18, SRS resource set #1 (for example, for CB usage) corresponds to SRS resource #1, and a power control adjustment state therefor can be configured, for example, as Fci1 (srs-PowerControlAdjustmentStates = absent). SRS resource set #2 (for example, for CB usage) corresponds to SRS resource #2, and a power control adjustment state therefor can be configured, for example, as Fci2 (srs-PowerControlAdjustmentStates = sameAsFci2). SRS resource set #3 (for example, for AS usage) corresponds to SRS resource #3, and a power control adjustment state therefor can be configured, for example, as a separate closed loop (srs-PowerControlAdjustmentStates = separateClosedLoop).

In the present aspect, it is unnecessary that the UE transmits PUSCH #3 to a DL TRP. In this case, DCI format 2_3 may indicate a TPC command for SRS #3.

The second SRS resource set (SRS #2) with (configured with) CB/NCB is not necessarily required. This is because in the existing specification, the second SRS resource set is allowed only for multi-TRP PUSCH repetition transmission or simultaneous multi-panel transmission (Simultaneous Transmission across Multiple Panels (STxMP)).

### <<Embodiment 0-4>>

The UE can be configured with a plurality of (two) same CL-PC adjustment states as that for the PUSCH and a plurality of (two) CL-PC adjustment states separate from that for the PUSCH, for the SRS.

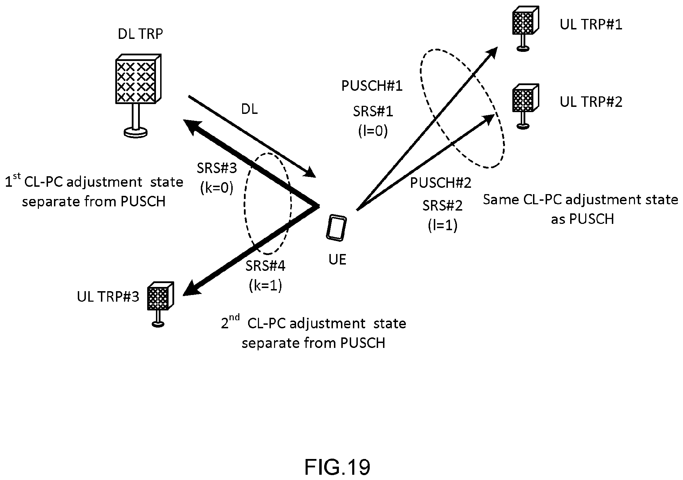

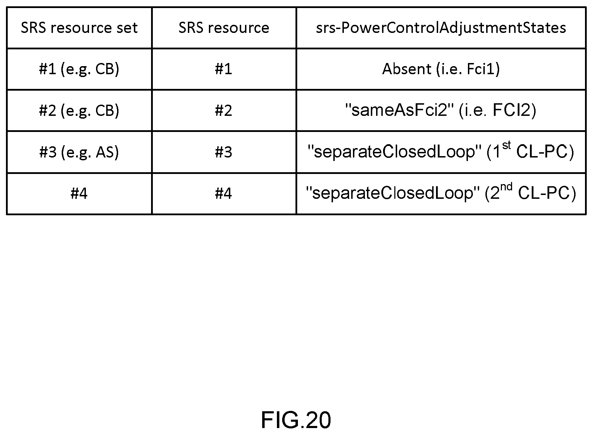

FIG. 19 is a conceptual diagram to show an example of SRS transmission according to embodiment 0-4. FIG. 20 is a diagram to show an example of SRS configuration according to embodiment 0-4.

As shown in FIG. 19, the UE may transmit SRS #1 (l = 0) to UL TRP #1 and transmit SRS #2 (l = 1) to UL TRP #2. In this case, the UE may apply, to the transmission of SRSs #1 and #2, the same CL-PC adjustment state (l = 0, 1) as that for the PUSCH.

The UE may transmit SRS #3 (k = 0) to a DL TRP and transmit SRS #4 (k = 1) to UL TRP #3. In this case, the UE may apply, to the transmission of SRS #3, a first CL-PC adjustment state (k = 0) separate from that for the PUSCH (independent of the PUSCH). The UE may apply, to the transmission of SRS #4, a second CL-PC adjustment state (k = 1) separate from that for the PUSCH (independent of the PUSCH).

In this manner, the UE may be configured with a plurality of (two) same CL-PC adjustment states (l = 0, 1) as that for the PUSCH, for SRSs (#1 to #2), and may be configured with CL-PC adjustment states (k = 0, 1) separate from that for the PUSCH, for SRSs (#3 to #4).

Note that the CL-PC adjustment states (k = 0, 1) specific to SRSs #3 and #4 will be described below.

As shown in FIG. 20, SRS resource set #1 (for example, for CB usage) corresponds to SRS resource #1, and a power control adjustment state therefor can be configured, for example, as Fci1 (srs-PowerControlAdjustmentStates = absent). SRS resource set #2 (for example, for CB usage) corresponds to SRS resource #2, and a power control adjustment state therefor can be configured, for example, as Fci2 (srs-PowerControlAdjustmentStates = sameAsFci2). SRS resource set #3 (for example, for AS usage) corresponds to SRS resource #3, and a power control adjustment state therefor can be configured, for example, as a first CL-PC (srs-PowerControlAdjustmentStates = separateClosedLoop). SRS resource set #4 corresponds to SRS resource #4, and a power control adjustment state therefor can be configured, for example, as a second CL-PC (srs-PowerControlAdjustmentStates = separateClosedLoop).

According to embodiments 0-0 to 0-4 described above, the UE can be configured with one or a plurality of (two) SRS resource sets having the same CL-PC adjustment state as that for the PUSCH and one or a plurality of (two) SRS resource sets having a CL-PC adjustment state separate from that for the PUSCH, in a certain CC.

These configurations may be supported for each SRS resource set/SRS resource. The configuration may be supported irrespective of whether a corresponding CC/BWP is configured with the PUSCH or SRS antenna switching.

As described above, SRS-specific CL-PC adjustment states (additional CL-PC adjustment states) separate from that for the PUSCH may be introduced (for example, k= 0, 1).

An index indicating a first/second CL-PC adjustment state separate from that for the PUSCH is configured for each SRS resource set/SRS resource (see FIG. 20).

One group common DCI (for example, DCI format 2_3) can indicate, in a certain CC/BWP, two TPC commands associated with first and second CL-PC adjustment states separate from that for the PUSCH.

According to the present embodiment, the UE can control SRS transmission by applying the same CL-PC adjustment state as that for a PUSCH or an SRS-specific CL-PC adjustment state separate from that for a PUSCH.

### <First Embodiment>

The first embodiment relates to a CL-PC adjustment state for an SRS in case 1.

When srs-PowerControlAdjustmentStates = absent or sameAsFci2 (in a case of following a CL-PC adjustment state for a PUSCH), a UE may apply embodiments 1-0 to 1-2 below.

### <<Embodiment 1-0>>

An existing specification is followed. According to the present aspect, the UE can appropriately determine a CL-PC adjustment state for the SRS without any change of the specification.

### <<Embodiment 1-1>>

The UE can be configured with one or a plurality of (for example, two) SRS resource sets having the same CL-PC adjustment state as that for the PUSCH and one SRS resource set having a CL-PC adjustment state separate from that for the PUSCH, for each CC/BWP.

These configurations may be supported for each SRS resource set/SRS resource. The configuration may be supported irrespective of whether a corresponding CC/BWP is configured with the PUSCH or SRS antenna switching.

In the present aspect, it is unnecessary that the UE transmits PUSCH #3 to a DL TRP (for example, see FIG. 17). In this case, DCI format 2_3 may indicate a TPC command for SRS #3.

As shown in FIG. 17 and FIG. 18, two SRS resource sets for CB/NCB usage may be used (case A).

Note that the second SRS resource set (SRS #2) with (configured with) CB/NCB is not necessarily required (for example, see FIG. 17). This is because in the existing specification, the second SRS resource set is allowed only for multi-TRP PUSCH repetition transmission or simultaneous multi-panel transmission (Simultaneous Transmission across Multiple Panels (STxMP)).

In case A, an SRS for CB/NCB usage may be applied only to single-DCI/multi-DCI multi-TRP PUSCH repetition transmission or STxMP.

Alternatively, an SRS for CB/NCB usage may be applied irrespective of single-DCI/multi-DCI multi-TRP PUSCH repetition transmission, STxMP, or a single-TRP PUSCH.

One SRS resource set for CB/NCB usage may be used (case B).

In case B, an SRS for CB/NCB usage may be applied only to a single-TRP PUSCH.

Alternatively, an SRS for CB/NCB usage may be applied irrespective of single-DCI/multi-DCI multi-TRP PUSCH repetition transmission, STxMP, or a single-TRP PUSCH.

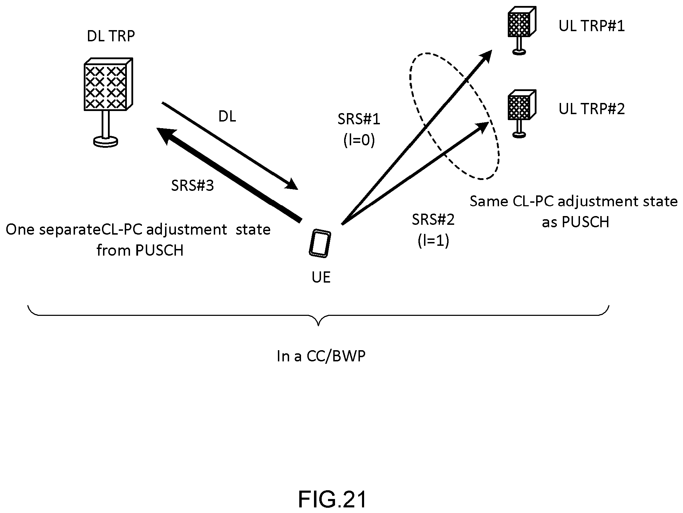

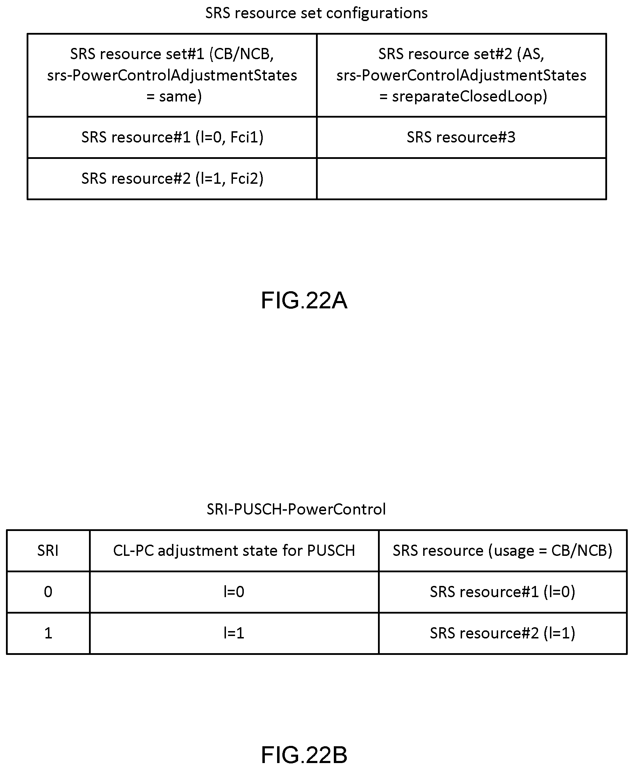

FIG. 21 is a conceptual diagram to show an example of SRS transmission according to embodiment 1-1. FIG. 22A and FIG. 22B are diagrams to show an example of SRS configuration according to embodiment 1-1.

As shown in FIG. 21, the UE may transmit SRS #1 (l = 0) to UL TRP #1 and transmit SRS #2 (l = 1) to UL TRP #2. In this case, the UE may apply, to the transmission of SRSs #1 and #2, the same CL-PC adjustment state (l = 0, 1) as that for the PUSCH.

The UE may transmit SRS #3 to a DL TRP. In this case, the UE may apply, to the transmission of SRS #3, one CL-PC adjustment state separate from that for the PUSCH (independent of the PUSCH).

In this manner, in one certain CC/BWP, the UE may be configured with a plurality of (two) same CL-PC adjustment states as that for the PUSCH, for SRS #1/#2, and may be configured with a CL-PC adjustment state separate from that for the PUSCH, for SRS #3.

In this case, such new SRS configuration as that shown in FIG. 22 may be defined. FIG. 22A is an example of configuration for the SRS resource sets, and FIG. 22B is an example of association (TPC commands) between SRIs, CL-PC adjustment states, and SRS resources.

As shown in FIG. 22A, for SRS resource set #1, CB/NCB usage may be configured, and a power control adjustment state may be configured to be the same as that for the PUSCH (srs-PowerControlAdjustmentStates = same). SRS resource set #1 may include (may be associated with) two SRS resources, or more specifically, SRS resource #1 (l = 0, Fci1) and SRS resource #2 (l = 1, Fci2).

For SRS resource set #2, AS usage may be configured, and a power control adjustment state may be configured, for example, as a separate closed loop [from that for the PUSCH] (srs-PowerControlAdjustmentStates = separateClosedLoop). SRS resource set #2 may include (may be associated with) one SRS resource #3.

As shown in FIG. 22B, SRI = 0 may be associated with SRS resource #1 (l = 0), and SRI = 1 may be associated with SRS resource #2 (l = 1).

For example, TPC commands having the same value of l may be applied to SRS resources configured with the same value of l.

According to embodiment 1-1, it is possible to support a scenario including one DL TRP and two UL TRPs.

### <<Variations of Embodiment 1-1>>

The UE can be configured with one SRS resource set having the same CL-PC adjustment state as that for the PUSCH and one SRS resource set having a CL-PC adjustment state separate from that for the PUSCH, for each CC/BWP. In other words, SRS #2 may not be configured.

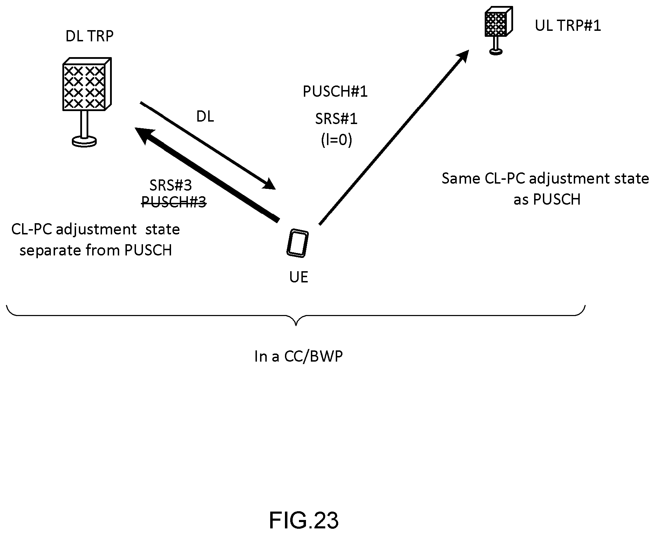

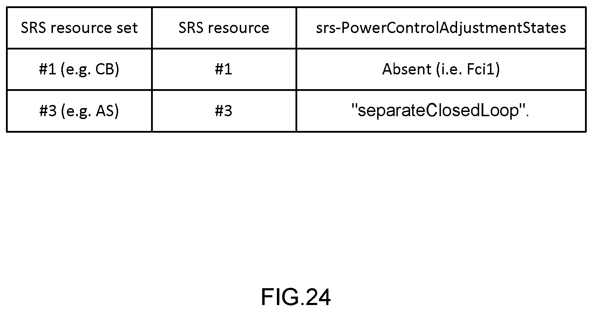

FIG. 23 is a conceptual diagram to show variations of the SRS transmission according to embodiment 1-1. FIG. 24 is a diagram to show variations of the SRS configuration according to embodiment 1-1.

As shown in FIG. 23, the UE may transmit SRS #1 (l = 0) to UL TRP #1. In this case, the UE may apply, to the transmission of SRS #1, the same CL-PC adjustment state (l = 0, 1) as that for the PUSCH.

The UE may transmit SRS #3 to a DL TRP. In this case, the UE may apply, to the transmission of SRS #3, one CL-PC adjustment state separate from that for the PUSCH (independent of the PUSCH).

It is unnecessary that the UE transmits PUSCH #3 to a DL TRP. In this case, DCI format 2_3 may indicate a TPC command for SRS #3.

As shown in FIG. 24, SRS resource set #1 (for example, for CB usage) corresponds to SRS resource #1, and a power control adjustment state therefor can be configured, for example, as Fci1 (srs-PowerControlAdjustmentStates = absent). SRS resource set #3 (for example, for AS usage) corresponds to SRS resource #3, and a power control adjustment state therefor can be configured, for example, as a separate closed loop (srs-PowerControlAdjustmentStates = separateClosedLoop).

### <<Embodiment 1-2>>

The UE can be configured with a plurality of (for example, four) SRS resource sets having the same CL-PC adjustment state as that for the PUSCH and one SRS resource set having a CL-PC adjustment state separate from that for the PUSCH, for each CC/BWP.

In this case, an SRI field for TPC commands may be formed by 2 bits. Alternatively, the SRI field may remain one bit, and two active SRIs among a plurality of (two or more) configured SRIs may be selected by using a MAC CE.

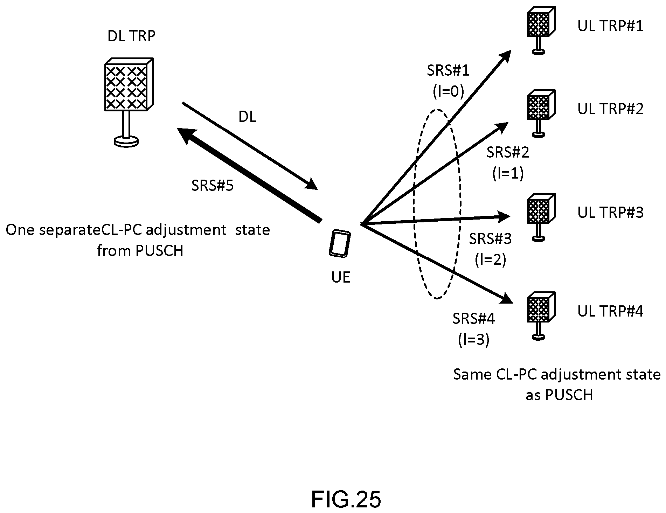

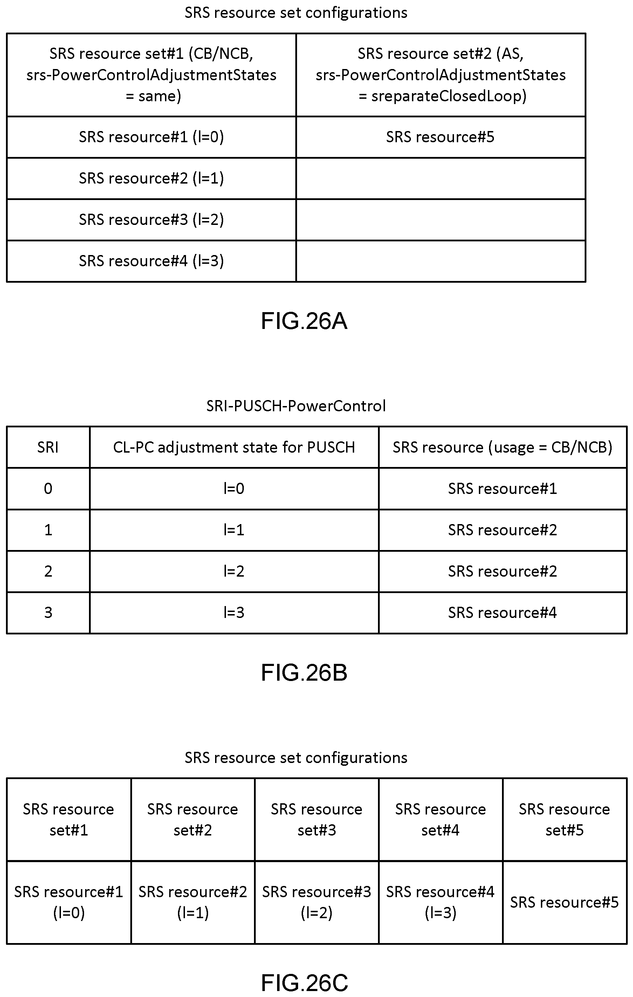

FIG. 25 is a conceptual diagram to show an example of SRS transmission according to embodiment 1-2. FIG. 26A to FIG. 26C are diagrams to show an example of SRS configuration according to embodiment 1-2.

As shown in FIG. 25, the UE may transmit SRS #1 (l = 0) to UL TRP #1, transmit SRS #2 (l = 1) to UL TRP #2, transmit SRS #3 (l = 2) to UL TRP #3, and transmit SRS #4 (l = 3) to UL TRP #4. In this case, the UE may apply, to the transmission of SRSs #1 to #4, the same CL-PC adjustment state (l = 0, 1, 2, 3) as that for the PUSCH.

The UE may transmit SRS #5 to a DL TRP. In this case, the UE may apply, to the transmission of SRS #5, one CL-PC adjustment state separate from that for the PUSCH (independent of the PUSCH).

In this manner, in one certain CC/BWP, the UE may be configured with a plurality of (four) same CL-PC adjustment states as that for the PUSCH, for SRSs #1 to #4, and may be configured with a CL-PC adjustment state separate from that for the PUSCH, for SRS #5.

In this case, such new SRS configuration as that shown in FIG. 26 may be defined. FIG. 26A is an example of configuration for the SRS resource sets, FIG. 26B is an example of association (TPC commands) between SRIs, CL-PC adjustment states, and SRS resources, and FIG. 26C is another example of the configuration for the SRS resource sets.

As shown in FIG. 26A, for SRS resource set #1, CB/NCB usage may be configured, and a power control adjustment state may be configured to be the same as that for the PUSCH (srs-PowerControlAdjustmentStates = same). SRS resource set #1 may include (may be associated with) four SRS resources, or more specifically, SRS resource #1 (l = 0), SRS resource #2 (l = 1), SRS resource #3 (l = 2), and SRS resource #4 (l = 3).

For SRS resource set #2, AS usage may be configured, and a power control adjustment state may be configured, for example, as a separate closed loop [from that for the PUSCH] (srs-PowerControlAdjustmentStates = separateClosedLoop). SRS resource set #2 may include (may be associated with) one SRS resource #5.

As shown in FIG. 26B, SRI = 0 may be associated with SRS resource #1 (l = 0), SRI = 1 may be associated with SRS resource #2 (l = 1), SRI = 2 may be associated with SRS resource #3 (l = 2), and SRI = 3 may be associated with SRS resource #4 (l = 3).

As described above, the CL-PC adjustment state for the PUSCH may be expanded to two or more (for example, four) CL-PC adjustment states (l = {0, 1, 2, 3}).

As shown in FIG. 26C, for SRS resource sets #1 to #4, CB/NCB usage may be configured, and power control adjustment states may be configured to be the same as those for the PUSCH (srs-PowerControlAdjustmentStates = sameAsFci2). SRS resource set #1 may include (may be associated with) SRS resource #1 (l = 0), SRS resource set #2 may include SRS resource #2 (l = 1), SRS resource set #3 may include SRS resource #3 (l = 2), and SRS resource set #4 may include SRS resource #4 (l = 3).

For SRS resource set #5, AS usage may be configured, and a power control adjustment state may be configured, for example, as a separate closed loop [from that for the PUSCH] (srs-PowerControlAdjustmentStates = separateClosedLoop). SRS resource set #5 may include (may be associated with) one SRS resource #5.

### (Example of Description of Specification)

When one SRS resource set for CB/NCB usage is configured, l = {0, 1, 2, 3} may be mapped to (associated with) a plurality of (different) SRS resources in the one SRS resource set.

When two SRS resource sets for CB/NCB usage are configured, some of l = {0, 1, 2, 3} may be mapped to [some SRS resources in] a first SRS resource set, and the rest of l = {0, 1, 2, 3} may be mapped to [some SRS resources in] a second SRS resource set.

For example, l = {0, 1} may be mapped to the first SRS resource set, and l = {2, 3} may be mapped to the second SRS resource set.

According to embodiment 1-2, it is possible to support a scenario including one DL TRP and a plurality of (four) UL TRPs.

According to the first embodiment, it is possible to appropriately control a CL-PC adjustment state for an SRS in case 1.

### <Second Embodiment>

The second embodiment relates to a CL-PC adjustment state for an SRS in case 2.

When srs-PowerControlAdjustmentStates = separateClosedLoop, and tpc-Accumulation is not provided (when SRS-specific CL-PC adjustment states are configured, and TPC accumulation is not configured), a UE may apply embodiments 2-1 to 2-2 below.

### <<Embodiment 2-1>>

An existing specification is followed. According to the present aspect, the UE can appropriately determine a CL-PC adjustment state for the SRS without any change of the specification.

### <<Embodiment 2-2>>

The UE can be configured with a plurality of (for example, two) SRS resource sets having CL-PC adjustment states separate from that for a PUSCH.

### (2-2-A)

Here, a new index with k = {0, 1} may be introduced to indicate an SRS-specific CL-PC adjustment state separate from that for the PUSCH. The SRS-specific CL-PC adjustment state h_{b,f,c}(i, k) separate from that for the PUSCH may be expressed by the sum of corresponding TPC commands (for example, the following equation). ${h}_{b , f , c} \left(i, k\right) = {h}_{b , f , c} \left(i-{i}_{0}, k-{k}_{0}\right) + {{Σ}_{m = 0}}^{C \left(Si\right) - 1} {δ}_{SRS , b , f , c} \left(m, k\right)$

When srs-PowerControlAdjustmentStates=separateClosedLoop is configured, the UE can be configured with k = {0, 1} for each SRS resource set. When the CL-PC adjustment state separate from that for the PUSCH is not configured, k = 0 may be assumed in the equation above.

δ_{SRS,b,f,c}(m, k) may be controlled by a first value of k (k = 0) and a second value of k (k = 1) of a TPC command (in DCI format 2_3).

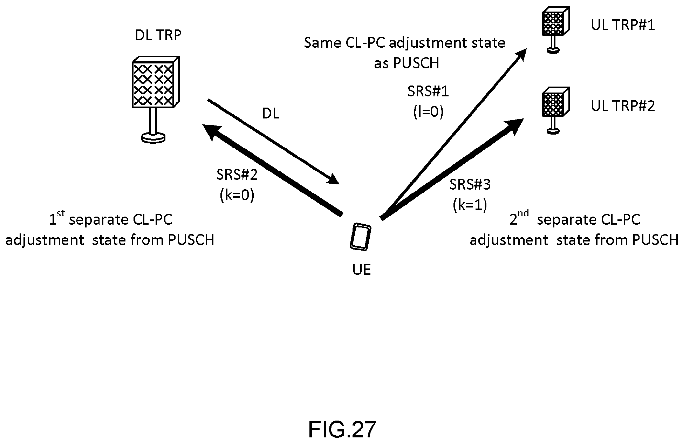

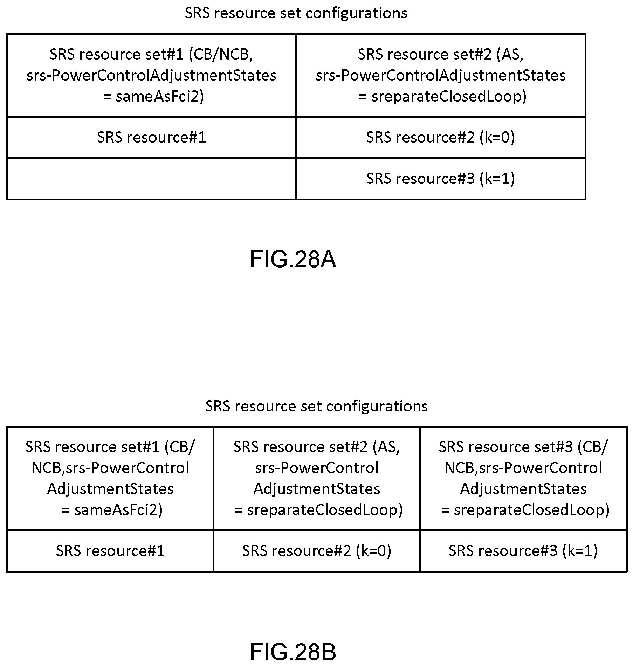

FIG. 27 is a conceptual diagram to show an example of SRS transmission according to embodiment 2-2/3-2. FIG. 28A and FIG. 28B are diagrams to show an example of SRS configuration according to embodiment 2-2/3-2.

As shown in FIG. 27, the UE may transmit SRS #1 (l = 0) to UL TRP #1. In this case, the UE may apply, to the transmission of SRS #1, the same CL-PC adjustment state (l = 0) as that for the PUSCH.

The UE may transmit SRS #2 (k = 0) to a DL TRP. In this case, the UE may apply, to the transmission of SRS #2, a first CL-PC adjustment state (k = 0) separate from that for the PUSCH (independent of the PUSCH).

Furthermore, the UE may transmit SRS #3 (k = 1) to UL TRP #2. In this case, the UE may apply, to the transmission of SRS #3, a second CL-PC adjustment state (k = 1) separate from that for the PUSCH (independent of the PUSCH).

In this manner, [in one certain CC/BWP], the UE may be configured with one same CL-PC adjustment state as that for the PUSCH, for SRS #1, and may be configured with CL-PC adjustment states separate from that for the PUSCH, for SRSs #2 and #3.

In this case, such new SRS configuration as that shown in FIG. 28 may be defined.

As shown in FIG. 28A, for SRS resource set #1, CB/NCB usage may be configured, and a power control adjustment state may be configured to be the same as that for the PUSCH (srs-PowerControlAdjustmentStates = sameAsFci2). SRS resource set #1 may include (may be associated with) one SRS resource #1. l = 0 may be associated with SRS resource set #1 by Fci2.

For SRS resource set #2, AS usage may be configured, and a power control adjustment state may be configured, for example, as a separate closed loop [from that for the PUSCH] (srs-PowerControlAdjustmentStates = separateClosedLoop). SRS resource set #2 may include (may be associated with) two SRS resources, or more specifically, SRS resource #2 (k = 0) and SRS resource #3 (k = 1).

Alternatively, as shown in FIG. 28B, for SRS resource set #1, CB/NCB usage may be configured, and a power control adjustment state may be configured to be the same as that for the PUSCH (srs-PowerControlAdjustmentStates = sameAsFci2). SRS resource set #1 may include (may be associated with) one SRS resource #1. l = 0 may be associated with SRS resource set #1 by Fci2.

For SRS resource set #2, AS usage may be configured, and a power control adjustment state may be configured, for example, as a separate closed loop [from that for the PUSCH] (srs-PowerControlAdjustmentStates = separateClosedLoop). SRS resource set #2 may include (may be associated with) one SRS resource #2 (k = 0).

For SRS resource set #3, CB/NCB usage may be configured, and a power control adjustment state may be configured, for example, as a separate closed loop [from that for the PUSCH] (srs-PowerControlAdjustmentStates = separateClosedLoop). SRS resource set #3 may include (may be associated with) one SRS resource #3 (k = 1).

### (2-2-B)

Here, a new equation may be introduced to indicate a plurality of (first and second) SRS-specific CL-PC adjustment states separate from that for the PUSCH. For example, the first CL-PC adjustment state h_{b,f,c}(i) may be expressed by an existing equation (for example, the following equation). ${h}_{b , f , c} \left(i\right) = {h}_{b , f , c} \left(i-{i}_{0}\right) + {{Σ}_{m = 0}}^{C \left(Si\right) - 1} {δ}_{SRS , b , f , c} \left(m\right)$ The value of δ may be controlled by a first TPC command (in DCI format 2_3).

On the other hand, the second CL-PC adjustment state h'_{b,f,c}(i) may be expressed by the following equation. $h {′}_{b , f , c} \left(i\right) = h {′}_{b , f , c} \left(i-{i}_{0}\right) + {{Σ}_{m = 0}}^{C \left(Si\right) - 1} δ {′}_{SRS , b , f , c} \left(m\right)$
Note that, for the second CL-PC adjustment state, "'" is added to the existing equation.
The value of δ' may be controlled by a second TPC command (in DCI format 2_3).

The second CL-PC adjustment state may be configured for each SRS resource set/SRS resource.

When the second CL-PC adjustment state separate from that for the PUSCH is not configured, and srs-PowerControlAdjustmentStates = separateClosedLoop is configured, the equation for the first CL-PC adjustment state may be applied.

Note that the number of CL-PC adjustment states separate from that for the PUSCH is not limited to two (first and second), and may be three or more.

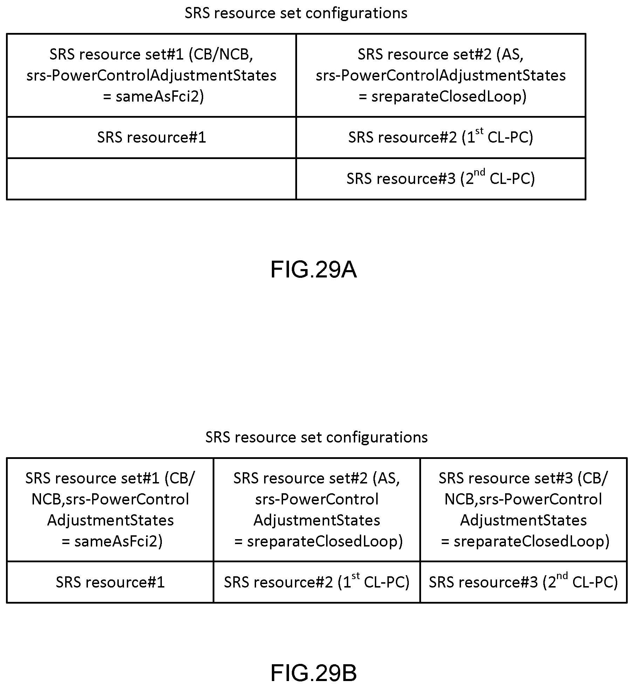

In this case, such new SRS configuration as that shown in FIG. 29 may be defined. FIG. 29A and FIG. 29B are examples of SRS configuration according to embodiment 2-2/3-2.

As shown in FIG. 29A, for SRS resource set #1, CB/NCB usage may be configured, and a power control adjustment state may be configured to be the same as that for the PUSCH (srs-PowerControlAdjustmentStates = sameAsFci2). SRS resource set #1 may include (may be associated with) one SRS resource #1. l = 0 may be associated with SRS resource set #1 by Fci2.

For SRS resource set #2, AS usage may be configured, and a power control adjustment state may be configured, for example, as a separate closed loop [from that for the PUSCH] (srs-PowerControlAdjustmentStates = separateClosedLoop). SRS resource set #2 may include (may be associated with) two SRS resources, or more specifically, SRS resource #2 (first CL-PC) and SRS resource #3 (second CL-PC).

Alternatively, as shown in FIG. 29B, for SRS resource set #1, CB/NCB usage may be configured, and a power control adjustment state may be configured to be the same as that for the PUSCH (srs-PowerControlAdjustmentStates = sameAsFci2). SRS resource set #1 may include (may be associated with) one SRS resource #1. l = 0 may be associated with SRS resource set #1 by Fci2.

For SRS resource set #2, AS usage may be configured, and a power control adjustment state may be configured, for example, as a separate closed loop [from that for the PUSCH] (srs-PowerControlAdjustmentStates = separateClosedLoop). SRS resource set #2 may include (may be associated with) one SRS resource #2 (first CL-PC).

For SRS resource set #3, CB/NCB usage may be configured, and a power control adjustment state may be configured, for example, as a separate closed loop [from that for the PUSCH] (srs-PowerControlAdjustmentStates = separateClosedLoop). SRS resource set #3 may include (may be associated with) one SRS resource #3 (second CL-PC).

According to the second embodiment, it is possible to appropriately control a CL-PC adjustment state for an SRS in case 2.

### <Third Embodiment>

The third embodiment relates to a CL-PC adjustment state for an SRS in case 3.

The third embodiment can be applied by interpreting case 2 in the second embodiment (when srs-PowerControlAdjustmentStates = separateClosedLoop, and tpc-Accumulation is not provided (when SRS-specific CL-PC adjustment states are configured, and TPC accumulation is not configured)) as case 3 (when srs-PowerControlAdjustmentStates = separateClosedLoop, and tpc-Accumulation is provided (when SRS-specific CL-PC adjustment states are configured, and TPC accumulation is configured)).

When srs-PowerControlAdjustmentStates = separateClosedLoop, and tpc-Accumulation is provided (when SRS-specific CL-PC adjustment states are configured, and TPC accumulation is configured), a UE may apply embodiments 3-1 to 3-2 below.

### <<Embodiment 3-1>>

An existing specification is followed. According to the present aspect, the UE can appropriately determine a CL-PC adjustment state for the SRS without any change of the specification.

### <<Embodiment 3-2>>

The UE can be configured with a plurality of (for example, two) SRS resource sets having CL-PC adjustment states separate from that for a PUSCH.

### (3-2-A)

Here, a new index with k = {0, 1} may be introduced to indicate an SRS-specific CL-PC adjustment state separate from that for the PUSCH. The SRS-specific CL-PC adjustment state h_{b,f,c}(i, k) separate from that for the PUSCH may be expressed by a value of a corresponding TPC command (for example, the following equation). ${h}_{b , f , c} \left(i, k\right) = {δ}_{SRS , b , f , c} \left(i, k\right)$

When srs-PowerControlAdjustmentStates=separateClosedLoop is configured, the UE can be configured with k = {0, 1} for each SRS resource set. When the CL-PC adjustment state separate from that for the PUSCH is not configured, k = 0 may be assumed in the equation above.

δ_{SRS,b,f,c}(m, k) may be controlled by a first value of k (k = 0) and a second value of k (k = 1) of a TPC command (in DCI format 2_3).

### (3-2-B)

Here, a new equation may be introduced to indicate a plurality of (first and second) SRS-specific CL-PC adjustment states separate from that for the PUSCH. For example, the first CL-PC adjustment state h_{b,f,c}(i) may be expressed by an existing equation (for example, the following equation). ${h}_{b , f , c} \left(i\right) = {δ}_{SRS , b , f , c} \left(i\right)$ The value of δ may be controlled by a first TPC command (in DCI format 2_3).

On the other hand, the second CL-PC adjustment state h'_{b,f,c}(i) may be expressed by the following equation. $h {′}_{b , f , c} \left(i\right) = δ {′}_{SRS , b , f , c} \left(i\right)$
Note that, for the second CL-PC adjustment state, "'" is added to the existing equation.
The value of δ' may be controlled by a second TPC command (in DCI format 2_3).

The second CL-PC adjustment state may be configured for each SRS resource set/SRS resource.

When the second CL-PC adjustment state separate from that for the PUSCH is not configured, and srs-PowerControlAdjustmentStates = separateClosedLoop is configured, the equation for the first CL-PC adjustment state may be applied.

Note that the number of CL-PC adjustment states separate from that for the PUSCH is not limited to two (first and second), and may be three or more.

According to the third embodiment, it is possible to appropriately control a CL-PC adjustment state for an SRS in case 3.

### <Fourth Embodiment>

The fourth embodiment relates to variations of the CL-PC adjustment states l and k.

In the zeroth to third embodiments described above, values of l and k corresponding to (associated with) the CL-PC adjustment states may follow at least one of aspects 4-0 to 4-2 below. In other words, the UE may control SRS transmission according to the following aspects.

In the present disclosure, the values of l and k may be configured/indicated for each SRS resource set/SRS resource.

### <<Aspect 4-0>>

l = {0, 1} may indicate the same CL-PC adjustment state as that for a PUSCH. For example, l = 0 may indicate a first CL-PC adjustment state, and l = 1 may indicate a second CL-PC adjustment state. Configuration/indication of k = {0, 1} may be applied when srs-PowerControlAdjustmentStates = sameAsFci2 is configured or when srs-PowerControlAdjustmentStates is absent or is released.

k = {0, 1} may indicate a CL-PC adjustment state separate from that for the PUSCH (independent of the PUSCH). For example, k = 0 may indicate a first CL-PC adjustment state, and k = 1 may indicate a second CL-PC adjustment state. Configuration/indication of k = {0, 1} may be applied when srs-PowerControlAdjustmentStates = separateClosedLoop is configured.

Configuring the first and second CL-PC adjustment states separate from that for the PUSCH requires srs-PowerControlAdjustmentStates to be configured.

### <<Aspect 4-1>>

Both the same CL-PC adjustment state as that for a PUSCH and a CL-PC adjustment state separate from that for the PUSCH may be indicated by using the same value/index of l (l = {0, 1, 2, 3}).

For example, when srs-PowerControlAdjustmentStates = sameAsFci2 is configured or when srs-PowerControlAdjustmentStates is absent or is released, l = {0, 1} may be used to indicate the same first and second CL-PC adjustment states as that for the PUSCH. l = 0 may indicate the first CL-PC adjustment state, and l = 1 may indicate the second CL-PC adjustment state.

When srs-PowerControlAdjustmentStates = separateClosedLoop is configured, l = {2, 3} may be used to indicate first and second CL-PC adjustment states separate from that for the PUSCH (independent of the PUSCH). l = 2 may indicate the first CL-PC adjustment state, and l = 3 may indicate the second CL-PC adjustment state.

Configuring the first and second CL-PC adjustment states separate from that for the PUSCH requires srs-PowerControlAdjustmentStates to be configured.

### <<Aspect 4-2>>

Both the same CL-PC adjustment state as that for a PUSCH and a CL-PC adjustment state separate from that for the PUSCH may be indicated by using the same value/index of l (l = {0, 1}).

When srs-PowerControlAdjustmentStates = sameAsFci2 is configured or when srs-PowerControlAdjustmentStates is absent or is released, l = {0, 1} for the same CL-PC adjustment state may be used to indicate the same first and second CL-PC adjustment states as that for the PUSCH.

When srs-PowerControlAdjustmentStates = separateClosedLoop is configured, l = {0, 1} for separate CL-PC adjustment states may be used to indicate first and second CL-PC adjustment states separate from that for the PUSCH (independent of the PUSCH).

In aspect 4-2, it may mean that l = {0, 1} for the same CL-PC adjustment state and l = {0, 1} for separate CL-PC adjustment states are different.

According to the fourth embodiment, it is possible to support various values of l and k.

### <Fifth Embodiment>

The fifth embodiment relates to a method of configuring a CL-PC adjustment state for an SRS.

As a method of configuring first and second SRS-specific CL-PC adjustment states independent of a PUSCH, at least one of aspects 5-1 to 5-2 below may be applied.

### <<Aspect 5-1>>

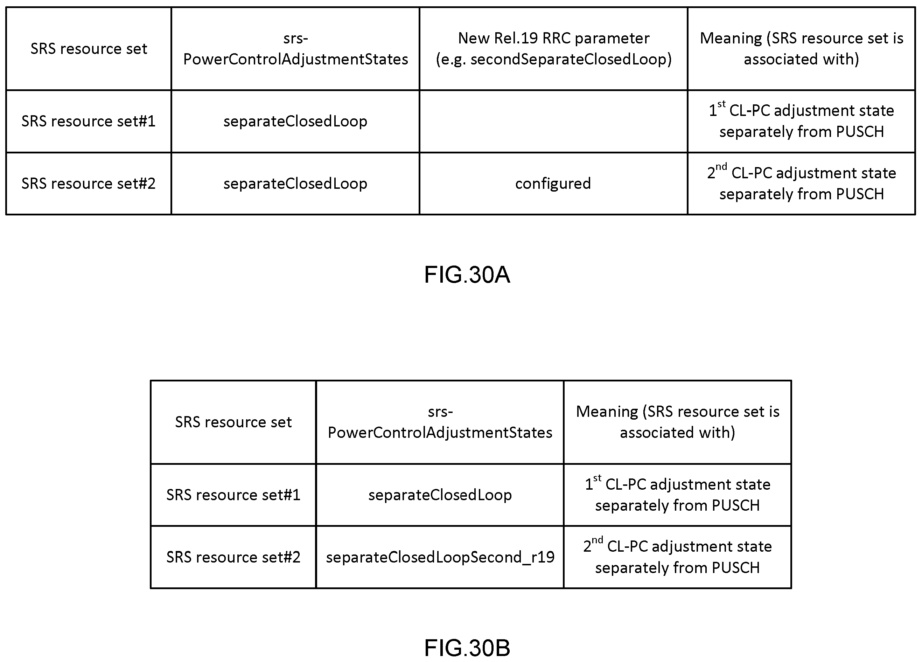

The first and second CL-PC adjustment states for the SRS separate from that for the PUSCH may be configured for each SRS resource set. FIG. 30A and FIG. 30B are diagrams to show an example of SRS configuration according to aspect 5-1.

### (5-1-1)

A combination of one or more higher layer parameters may be used. For example, an existing RRC parameter (srs-PowerControlAdjustmentStates = separateClosedLoop) may be used to configure CL-PC adjustment states separate from that for the PUSCH. A new RRC parameter for Rel. 19 (for example, secondSeparateClosedLoop) may be introduced to configure the second CL-PC adjustment state separate from that for the PUSCH.

For example, as shown in FIG. 30A, when srs-PowerControlAdjustmentStates = separateClosedLoop is configured for SRS resource set #1, and the new RRC parameter for Rel. 19 is not configured (or the new RRC parameter for Rel. 19 is configured as 0), it may mean that SRS resource set #1 is associated with the first CL-PC adjustment state separate from that for the PUSCH.

As shown in FIG. 30A, when srs-PowerControlAdjustmentStates = separateClosedLoop is configured for SRS resource set #2, and the new RRC parameter for Rel. 19 is configured (or the new RRC parameter for Rel. 19 is configured as 1), it may mean that SRS resource set #2 is associated with the second CL-PC adjustment state separate from that for the PUSCH.

### (5-1-2)

A new higher layer parameter may be used. For example, an existing RRC parameter (srs-PowerControlAdjustmentStates = separateClosedLoop) may be used to configure the first CL-PC adjustment state separate from that for the PUSCH. As shown in FIG. 30B, when srs-PowerControlAdjustmentStates = separateClosedLoop is configured for SRS resource set #1, it may mean that SRS resource set #1 is associated with the first CL-PC adjustment state separate from that for the PUSCH.

A new RRC parameter for Rel. 19 (for example, srs-PowerControlAdjustmentStates = separateClosedLoopSecond_r19) may be introduced to configure the second CL-PC adjustment state separate from that for the PUSCH. As shown in FIG. 30B, when srs-PowerControlAdjustmentStates = separateClosedLoopSecond_r19 is configured for SRS resource set #2, it may mean that SRS resource set #2 is associated with the second CL-PC adjustment state separate from that for the PUSCH.

### <<Aspect 5-2>>

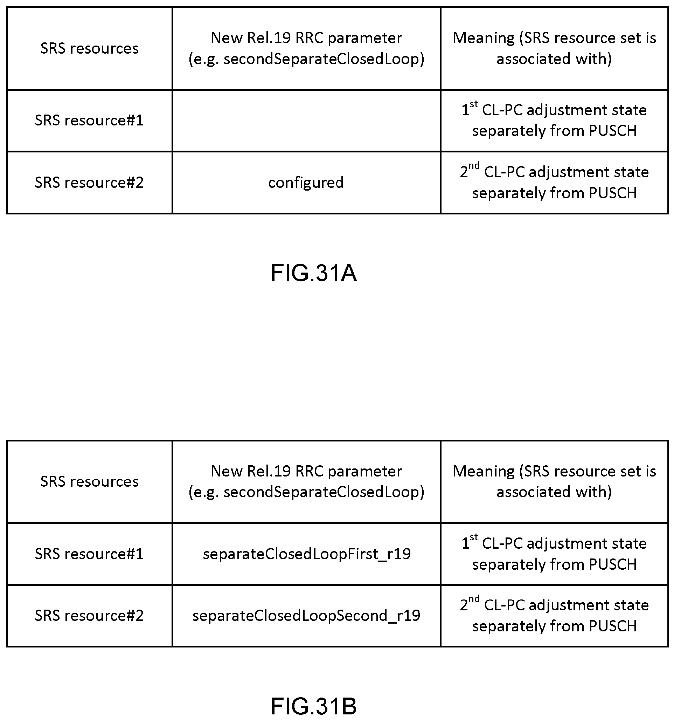

The first and second CL-PC adjustment states for the SRS separate from that for the PUSCH may be configured for each SRS resource. FIG. 31A and FIG. 31B are diagrams to show an example of SRS configuration according to aspect 5-2.

### (5-2-1)

A combination of one or more higher layer parameters may be used. For example, an existing RRC parameter (srs-PowerControlAdjustmentStates = separateClosedLoop) may be used for each SRS resource set to configure CL-PC adjustment states separate from that for the PUSCH. A new RRC parameter for Rel. 19 (for example, secondSeparateClosedLoop) may be introduced for each SRS resource set to indicate whether to apply, to an SRS resource, the second CL-PC adjustment state separate from that for the PUSCH.

For example, when srs-PowerControlAdjustmentStates = separateClosedLoop is configured for each SRS resource set (for example, SRS resource set #1), and the new RRC parameter for Rel. 19 is not configured for each SRS resource (for example, SRS resource #1 of FIG. 31A) (or the new RRC parameter for Rel. 19 is configured as 0), it may mean that SRS resource #1 is associated with the first CL-PC adjustment state separate from that for the PUSCH.

When srs-PowerControlAdjustmentStates = separateClosedLoop is configured for each SRS resource set (for example, SRS resource set #2), and the new RRC parameter for Rel. 19 is configured for each SRS resource (for example, SRS resource #2 of FIG. 31A) (or the new RRC parameter for Rel. 19 is configured as 1), it may mean that SRS resource #2 is associated with the second CL-PC adjustment state separate from that for the PUSCH.

### (5-2-2)

A new higher layer parameter may be used. For example, a new RRC parameter for Rel. 19 (for example, secondSeparateClosedLoop) may be used for each SRS resource to configure a CL-PC adjustment state separate from that for the PUSCH. As shown in FIG. 31B, when secondSeparateClosedLoop = separateClosedLoopFirst_r19 is configured for SRS resource #1, it may mean that SRS resource #1 is associated with the first CL-PC adjustment state separate from that for the PUSCH.

As shown in FIG. 31B, when secondSeparateClosedLoop = separateClosedLoopSecond_r19 is configured for SRS resource #2, it may mean that SRS resource #2 is associated with the second CL-PC adjustment state separate from that for the PUSCH.

According to the fifth embodiment, the UE can appropriately determine a CL-PC adjustment state for an SRS by using an existing/new higher layer parameter.

### <Sixth Embodiment>

The sixth embodiment relates to a TPC command in DCI format 2_3.

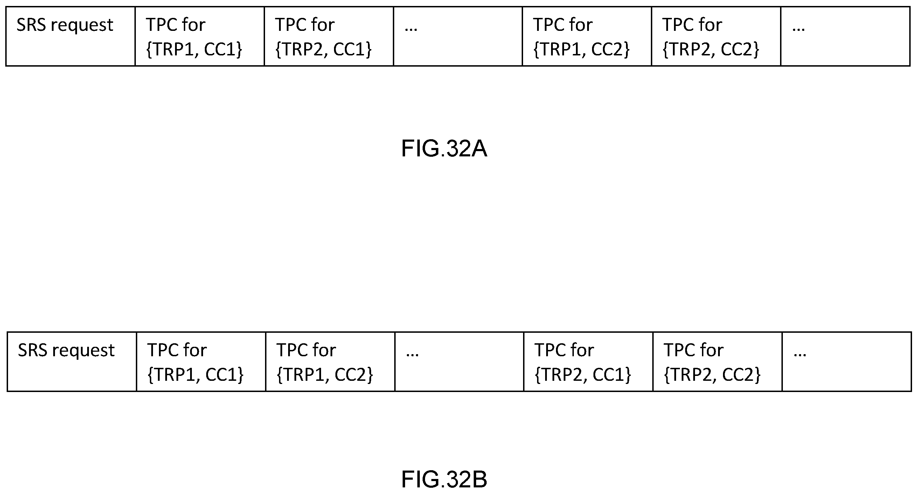

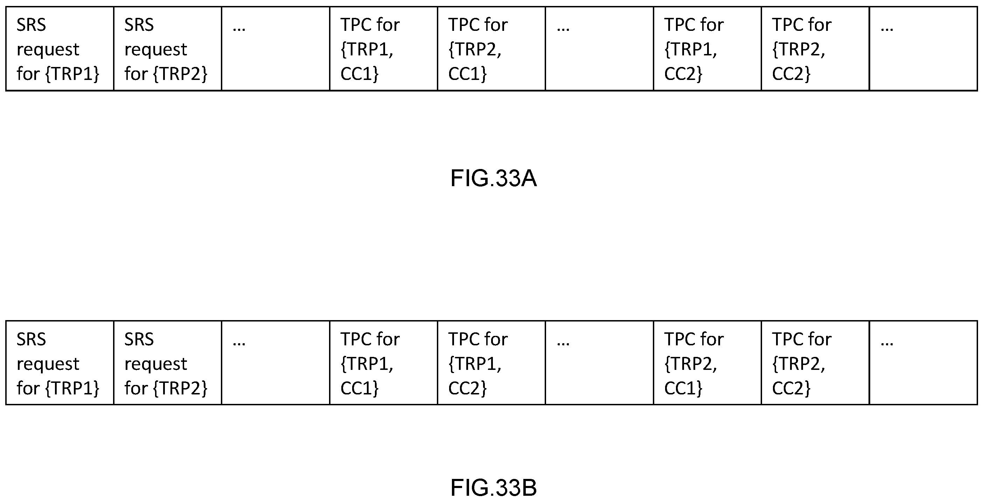

FIG. 32A and FIG. 32B are diagrams to show examples of the TPC command (DCI field) according to the sixth embodiment. FIG. 33A and FIG. 33B are diagrams to show other examples of the TPC command (DCI field) according to the sixth embodiment.

### <<Aspect 6-0>>

### {Relationship Between SRS and TPC Command for Multi-CC}

### <<Option 1>>

Group common DCI may include indication of both TPC commands for multi-CC and TPC commands for multi-TRP. In other words, the group common DCI may include TPC commands per CC and per TRP. The order of TPC command field configurations may be, for example, any one of option 1-1 or option 1-2 below. CC and cell may be interchangeably interpreted.

Option 1-1: The TPC commands may be configured in ascending order (or descending order) of cells, or may, when the cells are the same, be configured in ascending order (or descending order) of TRPs (for example, TPC command 1 for {cell #1, TRP #1}, TPC command 2 for {cell #1, TRP #2}, ..., TPC command 1 for {cell #2, TRP #1}, TPC command 2 for {cell #2, TRP #2}, ...). FIG. 32A is a diagram to show an example of the DCI field of option 1-1.
Option 1-2: The TPC commands may be configured in ascending order (or descending order) of TRPs, or may, when the TRPs are the same, be configured in ascending order (or descending order) of cells (for example, TPC command 1 for {cell #1, TRP #1}, TPC command 2 for {cell #2, TRP #1}, ..., TPC command 1 for {cell #1, TRP #2}, TPC command 2 for {cell #2, TRP #2}, ...). FIG. 32B is a diagram to show an example of the DCI field of option 1-2.

### <<Option 2>>

Group common DCI may include TPC commands for only multi-CC, or may include TPC commands for only multi-TRP. In this case, any one of option 2-1 or option 2-2 below may be applied.
Option 2-1: DCI format 2_3 includes TPC commands for only multi-CC. Another DCI format (for example, DCI format 2_X) includes TPC commands for multi-TRP.
Option 2-2: DCI format 2_3 may support both TPC commands for only multi-CC and TPC commands for multi-TRP, and may include one or more TPC command fields. The UE may determine, based on RRC signaling, whether the one or more TPC command fields indicate TPC commands for only multi-CC or TPC commands for multi-TRP.

### <<Option 3>>

The DCI may include both an SRS request and a TPC command. For example, the following examples may be applied. Option 3-1: A DCI format may include one SRS request and a plurality of TPC commands (for example, per TRP/per TRP group). Option 3-2: A DCI format may include a plurality of SRS requests (for example, per TRP/per TRP group) and a plurality of TPC commands (for example, per TRP/per TRP group). FIG. 33A is a diagram to show an example of a DCI field obtained by combining option 3-2 and option 1-1. FIG. 33B is a diagram to show an example of a DCI field obtained by combining option 3-2 and option 1-2.

According to the present aspect, the UE receives group common DCI including indication related to SRS transmission power control per TRP, and thus optimal SRS transmission power control can be performed per TRP. For example, even when one DL transmission point and a plurality of UL reception points are present in a cell, indication related to SRS transmission power control for a plurality of TRPs can be acquired by one piece of DCI, and thus optimal SRS transmission power control can be performed per TRP.

As described above, one DCI format 2_3 indicates TPC commands for a plurality of TRPs for a certain (given) CC.

In other words, DCI format 2_3 may be used to indicate TPC commands indicating first and second CL-PC adjustment states separate from that for a PUSCH, for a certain CC.

### <<Aspect 6-1>>

A TPC command field for the certain CC may be expanded to two fields (for example, doubled). With this, one DCI format 2_3 can simultaneously indicate TPC commands for a plurality of (two) TRPs (first and second CL-PC adjustment states separate from that for the PUSCH).

### <<Aspect 6-2>>

A TPC command field for the certain CC may be formed by one field (may remain as an existing field) to indicate a TPC command for one of the TRPs. In this case, an X bit may be added to indicate which TRP the TPC command is associated with (CL-PC adjustment state separate from that for the PUSCH). For example, when the number of CL-PC adjustment states separate from that for the PUSCH is two, X may equal 1.

According to aspect 6-2, DCI overhead can be reduced as compared to aspect 6-1 including two fields.

According to the sixth embodiment, the UE can appropriately determine a CL-PC adjustment state for an SRS by using DCI format 2_3 (TPC command).

### <Seventh Embodiment>

The seventh embodiment relates to an SRS resource set.

As described above, a unified TCI framework of Rel. 17/18 can be applied. In this case, it is necessary to clarify the number of SRS resource sets capable of being configured.

### <<Aspect 7-1>>

Up to two SRS resource sets may be configured similarly to an existing specification.

One SRS resource set may be configured for CB/NCB except for a multi-TRP PUSCH, STxMP, and an SDM/SFN PUSCH.

Two SRS resource sets may be configured for CB/NCB in a multi-TRP PUSCH, STxMP, or an SDM/SFN PUSCH.

Different SRS resources may be associated with different indices of l and k. For example, an index indicating the same CL-PC adjustment state as that for a PUSCH and an index indicating a CL-PC adjustment state separate from that for the PUSCH may differ between different (a plurality of) SRS resources.

### <<Aspect 7-2>>

When a specific higher layer parameter (for example, a configuration related to a second CL-PC adjustment state separate from that for a PUSCH/a configuration of a pathloss offset for a UL-only TRP) is configured, one or more SRS resource sets may be configured for CB/NCB irrespective of a multi-TRP PUSCH, STxMP, an SDM/SFN PUSCH, or a single-TRP PUSCH.

Different SRS resource sets may be associated with different indices of l and k. For example, an index indicating the same CL-PC adjustment state as that for the PUSCH and an index indicating a CL-PC adjustment state separate from that for the PUSCH may differ between different (a plurality of) SRS resource sets.

Different SRS resource sets may be associated with different UL TRPs.

According to the seventh embodiment, definition related to SRS resource sets becomes clear.

### <Variations>

In the present disclosure, a higher layer parameter "SRS-CarrierSwitching" may be used to configure SRS carrier switching in a case where the PUSCH is not configured, or SRS power control independent of power control of the PUSCH.

In the present disclosure, a TPC command corresponding to (indicating) only one of the first and second CL-PC adjustment states separate from that for the PUSCH may be notified by DCI format 2_3. In other words, the second TPC command may not be notified.

When two CL-PC adjustment states separate from that for the PUSCH are configured, in DCI format 2_3, a 1-bit field for explicitly notifying k = {0, 1} may be defined, for example.

Alternatively, when two CL-PC adjustment states separate from that for the PUSCH are configured, in DCI format 2_3, the field for explicitly notifying k = {0, 1} may not be defined. In this case, k = {0, 1} may be implicitly notified.

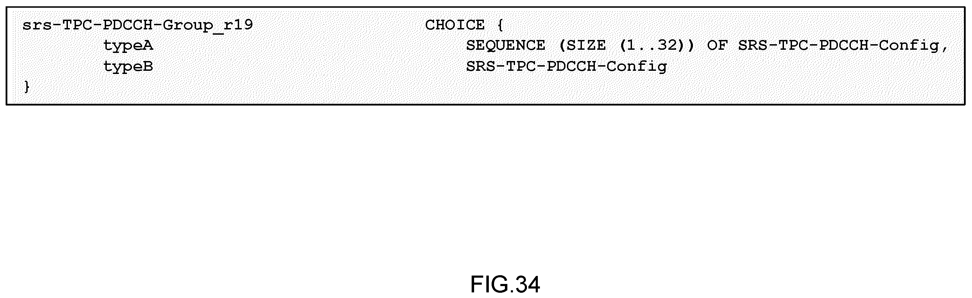

As an example of the implicit notification of k = {0, 1}, an SRS request field may be applied. FIG. 34 is a diagram to show an example of the SRS request field. Correspondence between the values of k and SRS resource sets/SRS resources shown in FIG. 34 may be predefined in a specification or may be configured/indicated by higher layer signaling/physical layer signaling. Not only the SRS request field, but also another field included in DCI format 2_3 may be used.

In the present disclosure, usage capable of being configured for an SRS resource set/SRS resource is not limited to CB/NCB and AS, and other usage (for example, beam management (BM)) may be configured. For example, usage corresponding to at least one (for example, k = 1) of k = {0, 1} for associating CL-PC adjustment states separate from that for the PUSCH may be configured as certain usage.

In the present disclosure, DCI format 2_3 may be applied to independent usage/function separate from carrier switching. For example, the UE may receive a TPC command indicating an SRS-specific CL-PC adjustment state by using DCI format 2_3, irrespective of configuration of carrier switching.

For example, when a new RRC parameter for Rel. 19 is configured, the existing condition for using DCI format 2_3 may not be applied. In this case, use of DCI format 2_3 may be controlled according to srs-TPC-PDCCH-Group = typeA/typeB. In other words, the UE may determine application of DCI format 2_3, according to srs-TPC-PDCCH-Group = typeA/typeB.

Alternatively, a new RRC parameter (for example, srs-TPC-PDCCH-Group_r19) for activating use of DCI format 2_3 may be defined (see FIG. 34). When the RRC parameter shown in FIG. 34 is configured, the UE may receive a TPC command indicating an SRS-specific CL-PC adjustment state by using DCI format 2_3, irrespective of configuration of carrier switching. Any one or both of typeA and typeB shown in FIG. 34 may be defined.

A TPC command indicating a CL-PC adjustment state separate from that for the PUSCH may be controlled by at least one of the following.
- DCI format 2_3
- DCI format 0_xx/DCI format 1_xx
- A combination of DCI format 2_3 and DCI format 0_xx/DCI format 1_xx

The present disclosure has described the case where an SRS resource set/SRS resource configured with the same CL-PC adjustment state as that for the PUSCH, and an SRS resource set/SRS resource configured with a CL-PC adjustment state separate from that for the PUSCH coexist, but is not limited to this. For example, CL-PC adjustment states separate from that for the PUSCH may be configured for all SRS resource sets/SRS resources.

### <Supplements>

### <<Notification of Information to UE>>

Notification of any information to a UE [from a network (NW) (for example, a base station (BS))] (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### <<Notification of Information from UE>>

Notification of any information from a UE [to an NW] (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### <<Regarding Application of Each Embodiment>>

In a UE/BS, (one or a plurality of) specific processing/operation/control/assumption/information for at least one of the above-described embodiments may be applied (may be used) when any one or two or more of the following conditions are satisfied:
- A higher layer parameter indicating the specific processing/operation/control/assumption/information is configured.
- The specific processing/operation/control/assumption/information is determined based on an associated higher layer parameter.
- The specific processing/operation/control/assumption/information is indicated/activated/triggered by a MAC CE/DCI/UCI/resource/channel/RS.
- A specific UE capability indicating (or associated with) the specific processing/operation/control/assumption/information is reported or supported.
- Application of the specific processing/operation/control/assumption/information is determined based on a specific condition.

The specific UE capability may indicate at least one of the following:
- supporting of the specific processing/operation/control/assumption/information
- supporting of a single-DCI based multi-TRP scenario
- supporting of scenario 1 (UL dense deployment)
- supporting of scenario 2 (HetNet)
- supporting of UL transmission (SRS/PUSCH/PUCCH/PRACH) to a UL reception point
- the number of supported UL reception points/DL transmission points
- supporting of the same/separate CL-PC adjustment state as/from that for a PUSCH
- supporting of simultaneous configuration of the same/separate CL-PC adjustment states as/from that for a PUSCH
- supporting of DCI format 2_3 that indicates a first/second TPC command for a certain CC

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

When the conditions above are not satisfied, the UE/BS may follow operation defined in an existing 3GPP release.

### (Supplementary Notes)

Regarding one embodiment (zeroth embodiment) of the present disclosure, the following supplementary notes of the invention will be given.

### {Supplementary Note 1}

A terminal including:
a receiving section that receives information related to a closed-loop power control (CL-PC) adjustment state for a sounding reference signal (SRS); and
a control section that determines, based on the information, whether the CL-PC adjustment state for the SRS is the same as that for a physical uplink shared channel (PUSCH) or SRS-specific, wherein
the control section applies the determined CL-PC adjustment state to transmission to a specific transmission/reception point.

### {Supplementary Note 2}

The terminal according to supplementary note 1, wherein the control section controls to transmit, to an uplink (UL) reception point, an SRS transmission applied with a same CL-PC adjustment state as that for the PUSCH and to transmit, to a downlink (DL) transmission point, an SRS transmission applied with an SRS-specific CL-PC adjustment state separate from that for the PUSCH.

### {Supplementary Note 3}

The terminal according to supplementary note 1 or 2, wherein the receiving section receives, for each SRS resource set or SRS resource, a configuration related to the CL-PC adjustment state for the SRS, and downlink control information (DCI) indicating the CL-PC adjustment state.

### {Supplementary Note 4}

The terminal according to any one of supplementary notes 1 to 3, wherein the control section transmits the PUSCH to an uplink (UL) reception point and does not transmit the PUSCH to a downlink (DL) transmission point.

### (Supplementary Notes)

Regarding one embodiment (first embodiment) of the present disclosure, the following supplementary notes of the invention will be given.

### {Supplementary Note 1}

A terminal including:
a receiving section that receives information related to a closed-loop power control (CL-PC) adjustment state for a sounding reference signal (SRS); and
a control section that determines, based on the information, whether the CL-PC adjustment state for the SRS is the same as that for a physical uplink shared channel (PUSCH) or SRS-specific, wherein
the control section controls to transmit, to an uplink (UL) reception point, an SRS transmission applied with a same CL-PC adjustment state as that for the PUSCH and to transmit, to a downlink (DL) transmission point, an SRS transmission applied with an SRS-specific CL-PC adjustment state separate from that for the PUSCH.

### {Supplementary Note 2}

The terminal according to supplementary note 1, wherein in the SRS transmission applied with the same CL-PC adjustment state as that for the PUSCH, a corresponding SRS resource set is configured for codebook or non-codebook usage.

### {Supplementary Note 3}

The terminal according to supplementary note 1 or 2, wherein in the SRS transmission applied with the SRS-specific CL-PC adjustment state separate from that for the PUSCH, a corresponding SRS resource set is configured for antenna switching usage.

### {Supplementary Note 4}

The terminal according to any one of supplementary notes 1 to 3, wherein the receiving section receives, for each component carrier (CC) or bandwidth part (BWP), a configuration related to an SRS resource set including a plurality of same CL-PC adjustment states as that for the PUSCH and an SRS resource set including one SRS-specific CL-PC adjustment state separate from that for the PUSCH.

### (Supplementary Notes)

Regarding one embodiment (second to fourth embodiments) of the present disclosure, the following supplementary notes of the invention will be given.

### {Supplementary Note 1}

A terminal including:
a receiving section that receives a configuration and an indication related to a closed-loop power control (CL-PC) adjustment state for a sounding reference signal (SRS); and
a control section that determines, based on the configuration, whether the CL-PC adjustment state for the SRS is the same as that for a physical uplink shared channel (PUSCH) or SRS-specific, wherein
the control section controls to transmit, to an uplink (UL) reception point, an SRS transmission applied with a same CL-PC adjustment state as that for the PUSCH and to transmit, to a downlink (DL) transmission point, an SRS transmission applied with an SRS-specific CL-PC adjustment state separate from that for the PUSCH, based on whether transmission power control accumulation is configured.

### {Supplementary Note 2}

The terminal according to supplementary note 1, wherein when the SRS-specific CL-PC adjustment state separate from that for the PUSCH is configured, and the transmission power control accumulation is not configured or is configured, the control section controls power for SRS transmission, based on an index indicating, in the configuration, the SRS-specific CL-PC adjustment state separate from that for the PUSCH.

### {Supplementary Note 3}

The terminal according to supplementary note 1 or 2, wherein when two SRS-specific CL-PC adjustment states separate from that for the PUSCH are configured, the control section transmits, to a DL reception point, an SRS applied with one of the SRS-specific CL-PC adjustment states and transmits, to a UL transmission point, an SRS applied with the other of the SRS-specific CL-PC adjustment states.

### {Supplementary Note 4}

The terminal according to any one of supplementary notes 1 to 3, wherein an index indicating the same CL-PC adjustment state as that for the PUSCH and an index indicating the SRS-specific CL-PC adjustment state separate from that for the PUSCH are configured for each SRS resource set or SRS resource.

### (Supplementary Notes)

Regarding one embodiment (fifth to seventh embodiments) of the present disclosure, the following supplementary notes of the invention will be given.

### {Supplementary Note 1}

A terminal including:
a receiving section that receives higher layer signaling for configuring a closed-loop power control (CL-PC) adjustment state for a sounding reference signal (SRS), and a transmission power control command indicating the CL-PC adjustment state; and
a control section that controls, based on the configuration, SRS transmission applied with an SRS-specific CL-PC adjustment state separate from that for the PUSCH, wherein
the configuration includes a parameter associated with a first or second SRS-specific CL-PC adjustment state separate from that for the PUSCH.

### {Supplementary Note 2}

The terminal according to supplementary note 1, wherein the SRS-specific CL-PC adjustment state separate from that for the PUSCH is configured for each SRS resource set or SRS resource.

### {Supplementary Note 3}

The terminal according to supplementary note 1 or 2, wherein the receiving section receives the TPC command indicating the SRS-specific CL-PC adjustment state separate from that for the PUSCH by using DCI format 2_3.

### {Supplementary Note 4}

The terminal according to any one of supplementary notes 1 to 3, wherein the control section determines whether to receive the TPC command by using DCI format 2_3, based on a specific higher layer parameter.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

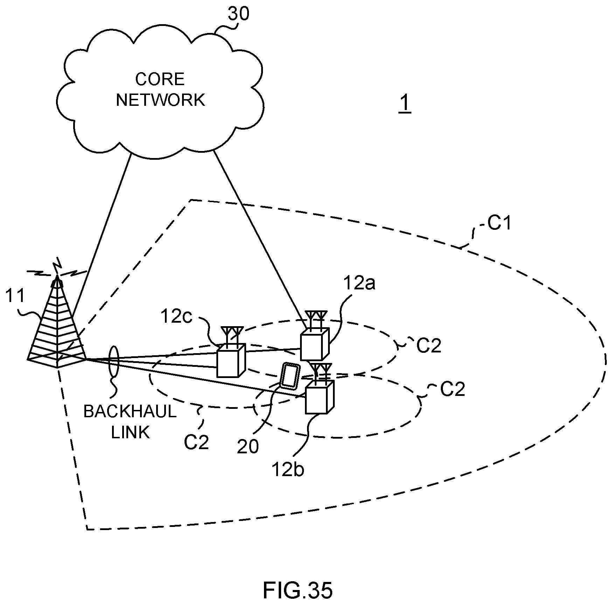

FIG. 35 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, the shape, the size, and the like of each cell and user terminal 20 are by no means limited to the aspect shown in the diagram. Hereinafter, the base stations 11 and 12 will be collectively referred to as "base stations 10," unless specified otherwise.

Note that the radio communication system 1 may use Multi Input Multi Output (MIMO). For example, one cell may be formed by one antenna/base station 10 or a plurality of antennas/base stations 10. One [virtual] cell (which may be referred to as, for example, a super-cell) may be formed by a plurality of [virtual] cells (which may be referred to as, for example, a sub-cell). The super-cell may correspond to a cell whose physical range is fixed, and the sub-cell may correspond to a cell whose physical range varies semi-statically/dynamically. In this case, the radio communication system 1 may be referred to as a cell-free system.

The user terminal 20 may be connected to at least one of the plurality of base stations 10. The user terminal 20 may use at least one of carrier aggregation (CA) or dual connectivity (DC) using a plurality of component carriers (CCs).

Each CC may be included in at least one of a first frequency band (Frequency Range 1 (FR1)) or a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) or frequency division duplex (FDD) in each CC.

The plurality of base stations 10 may be connected by a wired connection (for example, optical fiber in compliance with the Common Public Radio Interface (CPRI), the X2/Xn interface, and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), or the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) or the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH or the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), or scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) or a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

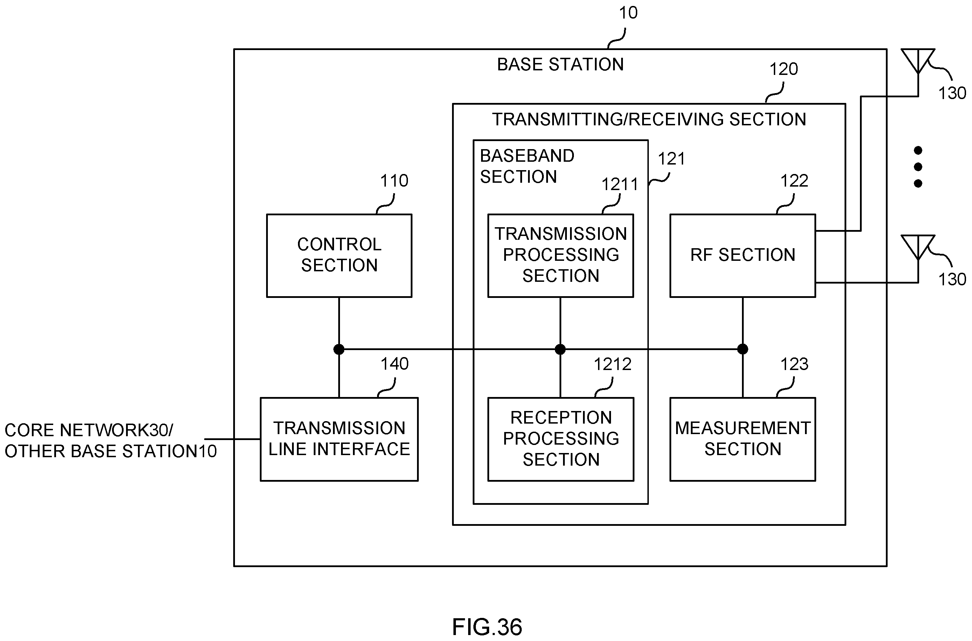

FIG. 36 is a diagram to show an example of a structure of the base station according to one embodiment. The base station 10 includes a control section 110, a transmitting/receiving section 120, transmitting/receiving antennas 130 and a transmission line interface (communication path interface) 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam or a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, or the transmission line interface 140.

Note that the base station 10 may be separated into three elements: a radio unit (RU), a distributed unit (DU), and a central unit (CU). For example, the RU may implement RF processing (such as digital beamforming, digital-to-analog conversion, and analog beamforming) and low-order functions (such as precoding, IFFT, and FFT) of a physical layer. The DU may implement high-order functions (such as coding to resource element mapping) of the physical layer, functions of a MAC layer, and functions of an RLC layer. The CU may implement functions of a PDCP layer, a Service Data Adaptation Protocol (SDAP) layer, and an RRC layer.

In the present disclosure, the base station 10 may include one apparatus implementing all the functions of the RU, DU, and CU, or may include a plurality of apparatuses each implementing some of the functions of the RU, DU, and CU and connected to each other. In the present disclosure, the base station 10 may be interpreted as the RU/DU/CU, and vice versa.

The transmitting/receiving section 120 may transmit information related to a closed-loop power control (CL-PC) adjustment state for a sounding reference signal (SRS). The control section 110 may determine, based on the information, whether the CL-PC adjustment state for the SRS is the same as that for a physical uplink shared channel (PUSCH) or SRS-specific, and may control reception of an SRS transmission applied with the determined CL-PC adjustment state.

The transmitting/receiving section 120 may transmit information related to a closed-loop power control (CL-PC) adjustment state for a sounding reference signal (SRS). The control section 110 may determine, based on the information, whether the CL-PC adjustment state for the SRS is the same as that for a physical uplink shared channel (PUSCH) or SRS-specific, and may control to receive, in a downlink (DL) transmission point, an SRS transmission applied with an SRS-specific CL-PC adjustment state separate from that for the PUSCH.

The transmitting/receiving section 120 may transmit a configuration and an indication related to a closed-loop power control (CL-PC) adjustment state for a sounding reference signal (SRS). The control section 110 may determine, based on the configuration, whether the CL-PC adjustment state for the SRS is the same as that for a physical uplink shared channel (PUSCH) or SRS-specific, and may control to receive, in a downlink (DL) transmission point, an SRS transmission applied with an SRS-specific CL-PC adjustment state separate from that for the PUSCH, based on whether transmission power control accumulation is configured.

The transmitting/receiving section 120 may transmit higher layer signaling for configuring a closed-loop power control (CL-PC) adjustment state for a sounding reference signal (SRS), and a transmission power control command indicating the CL-PC adjustment state. The control section 110 may control to receive, from a terminal, an SRS transmission applied with an SRS-specific CL-PC adjustment state separate from that for the PUSCH, based on the configuration. The configuration may include a parameter associated with a first or second SRS-specific CL-PC adjustment state separate from that for the PUSCH.

### (User Terminal)

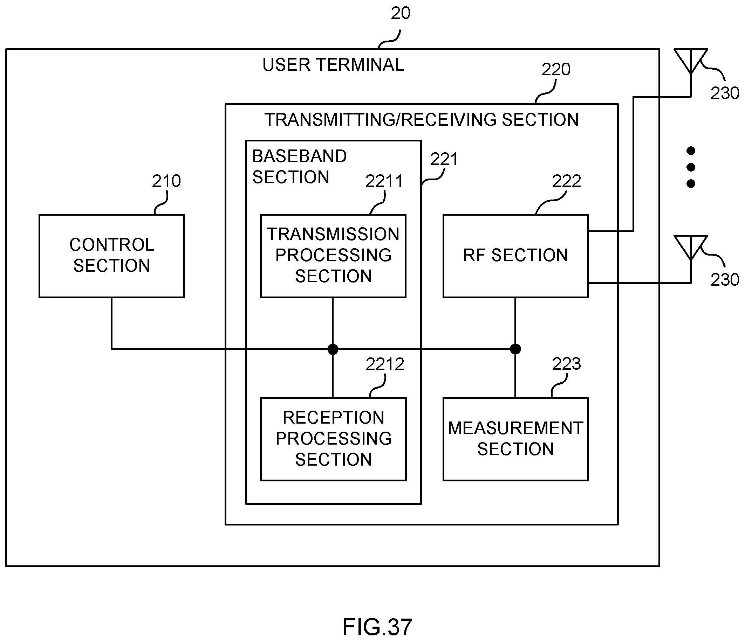

FIG. 37 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam or a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, or the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 or the transmitting/receiving antennas 230.

The transmitting/receiving section 220 may receive information related to a closed-loop power control (CL-PC) adjustment state for a sounding reference signal (SRS). The control section 210 may determine, based on the information, whether the CL-PC adjustment state for the SRS is the same as that for a physical uplink shared channel (PUSCH) or SRS-specific. The control section 210 may apply the determined CL-PC adjustment state to transmission to a specific transmission/reception point. The control section 210 may control to transmit, to an uplink (UL) reception point, an SRS transmission applied with a same CL-PC adjustment state as that for the PUSCH and to transmit, to a downlink (DL) transmission point, an SRS transmission applied with an SRS-specific CL-PC adjustment state separate from that for the PUSCH. The transmitting/receiving section 120 may receive, for each SRS resource set or SRS resource, a configuration related to the CL-PC adjustment state for the SRS, and downlink control information (DCI) indicating the CL-PC adjustment state. The control section 210 may control to transmit the PUSCH to an uplink (UL) reception point and not to transmit the PUSCH to a downlink (DL) transmission point.

The transmitting/receiving section 120 may receive information related to a closed-loop power control (CL-PC) adjustment state for a sounding reference signal (SRS). The control section 210 may determine, based on the information, whether the CL-PC adjustment state for the SRS is the same as that for a physical uplink shared channel (PUSCH) or SRS-specific. The control section 210 may control to transmit, to an uplink (UL) reception point, an SRS transmission applied with a same CL-PC adjustment state as that for the PUSCH and to transmit, to a downlink (DL) transmission point, an SRS transmission applied with an SRS-specific CL-PC adjustment state separate from that for the PUSCH. In the SRS transmission applied with the same CL-PC adjustment state as that for the PUSCH, a corresponding SRS resource set may be configured for codebook or non-codebook usage. In the SRS transmission applied with the SRS-specific CL-PC adjustment state separate from that for the PUSCH, a corresponding SRS resource set may be configured for antenna switching usage. The transmitting/receiving section 120 may receive, for each component carrier (CC) or bandwidth part (BWP), a configuration related to an SRS resource set including a plurality of same CL-PC adjustment states as that for the PUSCH and an SRS resource set including one SRS-specific CL-PC adjustment state separate from that for the PUSCH.

The transmitting/receiving section 120 may receive a configuration and an indication related to a closed-loop power control (CL-PC) adjustment state for a sounding reference signal (SRS). The control section 210 may determine, based on the configuration, whether the CL-PC adjustment state for the SRS is the same as that for a physical uplink shared channel (PUSCH) or SRS-specific. The control section 210 may control to transmit, to an uplink (UL) reception point, an SRS transmission applied with a same CL-PC adjustment state as that for the PUSCH and to transmit, to a downlink (DL) transmission point, an SRS transmission applied with an SRS-specific CL-PC adjustment state separate from that for the PUSCH, based on whether transmission power control accumulation is configured. When the SRS-specific CL-PC adjustment state separate from that for the PUSCH is configured, and the transmission power control accumulation is not configured or is configured, the control section 210 may control power for SRS transmission, based on an index indicating, in the configuration, the SRS-specific CL-PC adjustment state separate from that for the PUSCH. When two SRS-specific CL-PC adjustment states separate from that for the PUSCH are configured, the control section 210 may control to transmit, to a DL reception point, an SRS applied with one of the SRS-specific CL-PC adjustment states and to transmit, to a UL transmission point, an SRS applied with the other of the SRS-specific CL-PC adjustment states. An index indicating the same CL-PC adjustment state as that for the PUSCH and an index indicating the SRS-specific CL-PC adjustment state separate from that for the PUSCH may be configured for each SRS resource set or SRS resource.

The transmitting/receiving section 120 may receive higher layer signaling for configuring a closed-loop power control (CL-PC) adjustment state for a sounding reference signal (SRS), and a transmission power control command indicating the CL-PC adjustment state. The control section 210 may control, based on the configuration, SRS transmission applied with an SRS-specific CL-PC adjustment state separate from that for the PUSCH. The configuration may include a parameter associated with a first or second SRS-specific CL-PC adjustment state separate from that for the PUSCH. The SRS-specific CL-PC adjustment state separate from that for the PUSCH may be configured for each SRS resource set or SRS resource. The transmitting/receiving section 120 may receive the TPC command indicating the SRS-specific CL-PC adjustment state separate from that for the PUSCH by using DCI format 2_3. The control section 210 may determine whether to receive the TPC command by using DCI format 2_3, based on a specific higher layer parameter.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

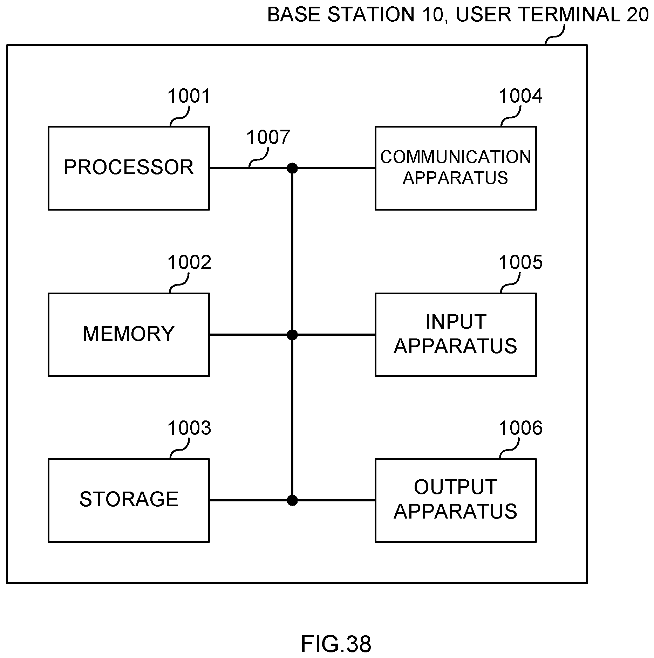

For example, a base station, a user terminal, and so on according to one embodiment of the present disclosure may function as a computer that executes the processes of the radio communication method of the present disclosure. FIG. 38 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

It should be noted that an apparatus (e.g., a network node providing NF) included in the core network 30 may also be realized by the functional blocks / hardware structure described above.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

For any information (e.g., variables, constants, parameters) described in the present disclosure, even if not explicitly stated in the above embodiments, information indicating/identifying [a value of] such information (or information related to such information) may be notified from any first device (e.g., UE / base station) to any second device (e.g., base station / UE).

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

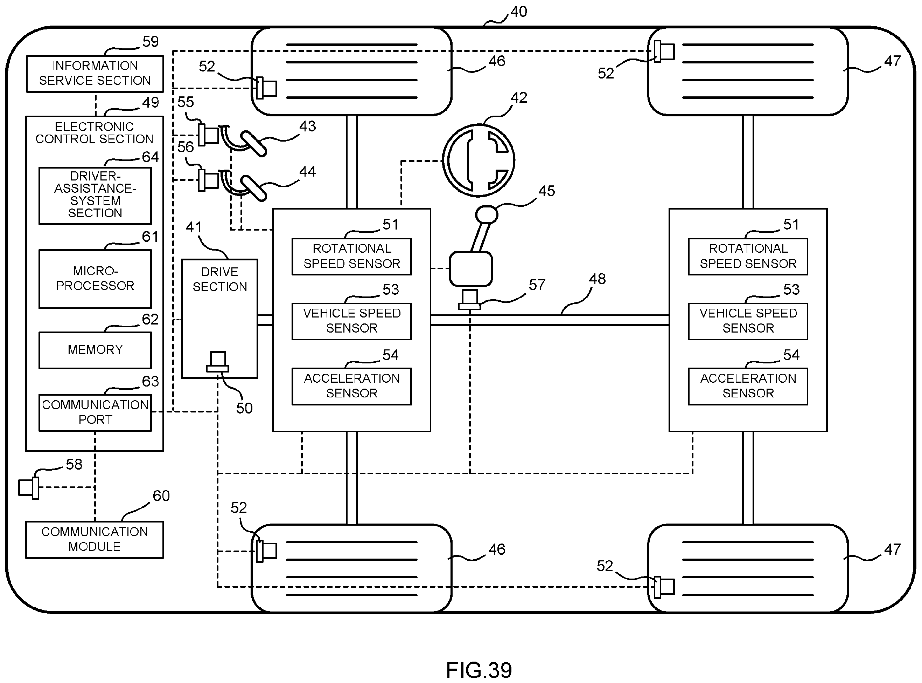

FIG. 39 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...", "..." (if "..." above is a to-infinitive, this "..." is a verb without "to"), or the like. "Does not expect ..." may be used interchangeably with "be not expected ...", "does not ..." (if "..." above is a to-infinitive, this "..." is a verb without "to"), or the like. Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a configuration and an indication related to a closed-loop power control (CL-PC) adjustment state for a sounding reference signal (SRS); and
a control section that determines, based on the configuration, whether the CL-PC adjustment state for the SRS is the same as that for a physical uplink shared channel (PUSCH) or SRS-specific, wherein
the control section controls to transmit, to an uplink (UL) reception point, an SRS transmission applied with a same CL-PC adjustment state as that for the PUSCH and to transmit, to a downlink (DL) transmission point, an SRS transmission applied with an SRS-specific CL-PC adjustment state separate from that for the PUSCH, based on whether transmission power control accumulation is configured.

2. The terminal according to claim 1, wherein
when the SRS-specific CL-PC adjustment state separate from that for the PUSCH is configured, and the transmission power control accumulation is not configured or is configured, the control section controls power for SRS transmission, based on an index indicating, in the configuration, the SRS-specific CL-PC adjustment state separate from that for the PUSCH.

3. The terminal according to claim 1, wherein
when two SRS-specific CL-PC adjustment states separate from that for the PUSCH are configured, the control section transmits, to a DL reception point, an SRS applied with one of the SRS-specific CL-PC adjustment states and transmits, to a UL transmission point, an SRS applied with the other of the SRS-specific CL-PC adjustment states.

4. The terminal according to claim 1, wherein
an index indicating the same CL-PC adjustment state as that for the PUSCH and an index indicating the SRS-specific CL-PC adjustment state separate from that for the PUSCH are configured for each SRS resource set or SRS resource.

5. A radio communication method for a terminal, comprising:
receiving a configuration and an indication related to a closed-loop power control (CL-PC) adjustment state for a sounding reference signal (SRS);
determining, based on the configuration, whether the CL-PC adjustment state for the SRS is the same as that for a physical uplink shared channel (PUSCH) or SRS-specific; and
controlling to transmit, to an uplink (UL) reception point, an SRS transmission applied with a same CL-PC adjustment state as that for the PUSCH and to transmit, to a downlink (DL) transmission point, an SRS transmission applied with an SRS-specific CL-PC adjustment state separate from that for the PUSCH, based on whether transmission power control accumulation is configured.

6. A base station comprising:
a transmitting section that transmits a configuration and an indication related to a closed-loop power control (CL-PC) adjustment state for a sounding reference signal (SRS); and
a control section that determines, based on the configuration, whether the CL-PC adjustment state for the SRS is the same as that for a physical uplink shared channel (PUSCH) or SRS-specific and that controls to receive, in a downlink (DL) transmission point, an SRS transmission applied with an SRS-specific CL-PC adjustment state separate from that for the PUSCH, based on whether transmission power control accumulation is configured.
